(19) Europäisches Patentamt
European Patent Office
Office européen des brevets

(11) **EP 2 302 081 B1**

(12) **EUROPÄISCHE PATENTSCHRIFT**


(45) Veröffentlichungstag und Bekanntmachung des Hinweises auf die Patenterteilung:
**14.10.2020 Patentblatt 2020/42**

(21) Anmeldenummer: **10007653.8**

(22) Anmeldetag: **23.07.2010**

(51) Int Cl.:
***C21D 1/74*** *(2006.01)* ***C21D 1/76*** *(2006.01)*
***C23C 8/20*** *(2006.01)* ***F27D 7/00*** *(2006.01)*
***F27D 17/00*** *(2006.01)* ***C23C 8/22*** *(2006.01)*
***C23C 8/32*** *(2006.01)*


(54) **Verfahren und Vorrichtung zur Aufbereitung von Prozessgasen für Wärmebehandlungen von metallischen Werkstoffen/Werkstücken in Industrieöfen**

Method and device for preparing process gases for the thermal treatment of metallic materials/workpieces in industrial ovens

Procédé et dispositif de préparation de gaz de procédé pour des traitements à chaud de matériaux/pièces métalliques dans des fours industriels


(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **26.08.2009 DE 102009038598**

(43) Veröffentlichungstag der Anmeldung:
**30.03.2011 Patentblatt 2011/13**



(73) Patentinhaber: **Ipsen International GmbH**
**47533 Kleve (DE)**

(72) Erfinder:
- **Grobler, Hendrik, Dr.**
  **47551 Bedburg-Hau (DE)**
- **Haase, Peter**
  **46418 Isselburg (DE)**
- **Edenhofer, Bernd, Dr.**
  **47533 Kleve (DE)**
- **Bechthold, Jens, Dr.**
  **46499 Hamminkeln (DE)**
- **Requardt, Thorsten**
  **46483 Wesel (DE)**
- **Eversmann, Thomas**
  **46284 Dorsten (DE)**

(74) Vertreter: **Dennemeyer & Associates S.A.**
**Postfach 70 04 25**
**81304 München (DE)**



(56) Entgegenhaltungen:
**EP-A1- 1 122 330** **EP-A2- 2 135 961**
**DE-A1- 2 346 287** **DE-A1- 3 631 389**
**DE-A1- 4 110 361** **DE-A1- 19 919 738**
**DE-C1- 4 427 507** **DE-C1- 19 719 225**
**DE-U1- 29 908 528** **DE-U1-202007 003 738**


EP 2 302 081 B1


Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die Erfindung betrifft ein Verfahren und eine Vorrichtung zur Aufbereitung von Prozessgasen für Wärmebehandlungen von metallischen Werkstoffen/Werkstücken in Industrieöfen, wobei die aufheizbaren Prozessgase ein Behandlungsmedium wie z.B. Schutzgas und/oder wie z.B. Reaktionsgas umfassen.

### Stand der Technik

Allgemein versteht der Fachmann unter einem Prozessgas für die Wärmebehandlung von metallischen Werkstoffen/Werkstücken in Industrieöfen ein Behandlungsmedium wie z.B. Schutzgas, welches die Komponenten, Kohlenstoffmonoxid, Wasserstoff und Stickstoff, Kohlenstoffdioxid, Sauerstoff und/oder Wasserdampf aufweist, und/oder wie z.B. Reaktionsgas mit Kohlenwasserstoffen für aufkohlende Prozesse, die das so genannte Carborieren oder Carbonitrieren von metallischen Werkstücken/ Werkstoffen betreffen.

So wird z.B. beim Carborieren u.a. ein kohlenwasserstoffhaltiges Gas zu einem in der Behandlungskammer reagierenden Prozessgas für die auszubildende Ofenatmosphäre zugeführt. Dabei sollen die einzelnen Komponenten des Prozessgases zu einem kontrollierbaren Gleichgewichtszustand in der Ofenatmosphäre führen, um den Kohlenstoff von der Gasatmosphäre auf die metallischen Werkstücke/ Werkstoffe geregelt und reproduzierbar zu übertragen. Für eine automatische Kontrolle derartiger Prozesse dient die Regelung des C-Pegels, wie sie sich z.B. gemäß der DE 29 09 978 erfolgreich in der industriellen Praxis bei der Wärmebehandlung von metallischen Werkstücken/ Werkstoffen durchgesetzt hat.
Die hier schon vorteilhaft gelöste Regelung des C-Pegels lässt aber katalytisch nutzbare Potentiale bezogen auf heutige Anforderungen offen.

So hatte auch schon W. Göring in seinem Bericht "Heiß in den Ofenraum eingeführte Gasgemische als Atmosphäre bei der Wärmebehandlung von Stahl" (HTM 30 (1975) Heft 2, S. 107-) vorgeschlagen, mittels einer im Industrieofen integrierten Schutzgasretorte mit Katalysatorbett Prozessgas unabhängig von der Temperatur der Behandlungskammer in heißem Zustand in die Behandlungskammer einzuführen, um den Aktivierungsgrad einer Ofenatmosphäre zu beschleunigen.

Im Hinblick auf die heute bestehenden Anforderungen hat dieses Verfahren Nachteile, weil dort frisches Gas laufend zugeführt werden muss, also eine Regelung durch Gasanreicherung erfolgt, und es sind schädliche Emissionen in Kauf zu nehmen.

Die Verwendung von Katalysatoren wird weiterhin, wie z.B. in DE 299 08 528 U1, DE 36 32 577, DE 38 88 814, DE 40 05 710, DE 691 33 356 und in DE 44 16 469 beschrieben.

Im Weiteren ist die Wärmebehandlung von Metallen in karbonisierter Atmosphäre

- gemäß der GB 1,069,531,
- entsprechend der US 3,620,518 zur Behandlung der Oberflächen von Werkstücken in Härteöfen mit Katalysatorauskleidung aus Ni-Oxid, welche auf die keramische Innenwand aufgebracht ist und die verfügbare Oberfläche vergrößert,
- entsprechend der US 4,294,436 mit einem Ofen zur Wärmebehandlung von Metallteilen mit Schutzatmosphäre in Öfen mit katalytischen Wänden aus Ni,
- nach der US 5,645,808 für die katalytische Oxidation mit Karbon-Verwunden in Gasströmen und
- nach der US 2006/0081567 mit einer Plasma unterstützten Werkstoffbehandlung sowie
- nach der JP 62199761

offenbart.

Um qualitativ den Prozeßeffekt der Gasführung in vorgenannten Industrieöfen zu verbessern, wurde schon gemäss DE 10 2008 029 001.7-45 für eine Schutzgaseinsparung und Reduzierung von Heizenergieverlusten vorgeschlagen, einen Kohlenwasserstoff bedarfsgerecht zur Aufkohlung zuzuführen und das C-Potential im Schutzgas zu regeln sowie nicht regelbare und/oder unerwünschte Reaktionen auszuschliessen. Damit wurde ein neues Schutzgasrezirkulationssystem für die Gasaufkohlung geschaffen. Bei diesem reagieren in einem Aufbereitungsraum der Behandlungskammer eines gattungsgemässen Industrieofens die Komponenten Kohlenstoffdioxid, Sauerstoff und Wasserdampf mit einem zugeführten Kohlenwasserstoff wieder zu Kohlenstoffmonoxid und Wasserstoff, und zwar katalytisch. Vorteilhaft wird damit die Wiederaufbereitung von bereits "verbrauchtem" Schutzgas, d.h. einem Schutzgas mit einem niedrigen C-Potential erreicht. Die C-Potentialregelung erfolgt in dem Aufbereitungsraum der Behandlungskammer. Das "aufbereitete" Schutzgas kann dann wieder an einer oder mehreren Stellen in die Behandlungskammer eingespeist werden, so dass sich ein realer Kreisprozess für die Gasaufkohlung einstellt.

Nach diesem neuen Verfahren

- reagieren in einem ein Katalysatorbett aufweisenden Aufbereitungsraum eines Industrieofens die Komponenten Kohlenstoffdioxid, Sauerstoff und Wasserdampf mit zugeführtem Kohlenwasserstoff als Reaktionsgas zu Kohlenstoffmonoxid und Wasserstoff,
- weist das Schutzgas ein erhöhtes C-Potential auf, und das C-Potential wird geregelt,
- wird die katalytische Reaktion beschleunigt und
- wird das so aufbereitete Schutzgas rezirkulierend der Behandlungskammer wieder zugeführt.

Es sollte hiermit erreicht werden, die gleichmäßige Aufkohlung mit weiterhin senkbaren Prozessgaskosten zu verbessern.

Die Untersuchungen mussten jedoch vertieft werden, um eine noch zuverlässigere sowie reproduzierbare Wärmebehandlung für die Betreiber von Industrieöfen zu realisieren, weil bei dem zuvor beschriebenen Verfahren ein möglichst dichter Abschluss der Behandlungskammer wie Heizkammer erforderlich ist und höhere Reaktionstemperaturen in der Heizkammer als z.B. 850 - 950° C nicht vorliegen.

Es waren dabei die Qualitätsanforderungen beim Einsatzhärten insbesondere hinsichtlich der Parameter, wie

- Einsatzhärtungstiefe/Aufkohlungstiefe,
- Randhärte/Randkohlenstoffgehalt,
- Perlit/Troostitsaum,
- Restaustenitgehalt,
- Carbidbildung,
- Randoxidationstiefe sowie auch
- Maß- und Formänderungen und
- Kernhärte

nochmals zu analysieren, sofern sie zumindest indirekt mit dem Grad der Aufkohlung in Beziehung zu bringen waren. Dabei spielt sowohl die Tiefe der Aufkohlung als auch die Kohlenstoffkonzentration eine wichtige Rolle.

Bei den existierenden industriellen Aufkohlungsverfahren, wie die Gasaufkohlung in Atmosphärenöfen und die Niederdruckaufkohlung in Vakuumöfen, besteht zunächst ein dem Fachmann geläufiges Ziel: Alle Werkstückpartien in einer Charge sollen völlig gleichmäßig, auf gleichen Rand-C-Gehalt und gleiche Aufkohlungstiefe aufgekohlt werden.

Mit der Gasaufkohlung, bei der die Ofenatmosphäre weitgehend über Gleichgewichtsreaktionen regelbar ist, kann dies besser erreicht werden, als mit einer Ungleichgewichtsaufkohlung mit Kohlenwasserstoffen.

Demzufolge gilt auch das Primat der Gasaufkohlung, d.h. der atmosphärischen Gasaufkohlung.

Hier laufen folgende bekannte, unterschiedliche Prozessschritte ab, deren Kenntnis für eine reproduzierbare und gleichmäßige Aufkohlung entscheidend ist:

1. Die Gasreaktionen zur Erzeugung der aufkohlenden Gaskomponenten in der Atmosphäre.

2. Die konvektive Gasphasenhomogenisierung für den Transport der kohlenstoffhaltigen Moleküle innerhalb der Gasphase und zum Bauteil.

3. Der Diffusionstransport, d.h. der Transport der kohlenstoffhaltigen Moleküle durch die Strömungsgrenzschicht an die Bauteiloberfläche.

4. Die Dissoziation und Adsorption betreffend die Spaltung der Moleküle an der Bauteiloberfläche.

5. Die Absorption, d.h. die Aufnahme des Kohlenstoffs durch die Bauteiloberfläche.

6. Die Diffusion als Transport des Kohlenstoffs in das Bauteil.

Wie schon gemäss der DE 10 2008 029 001.7-45 im Ergebnis dargestellt, sind die für die Aufkohlung massgebenden Reaktionen in der Aufkohlungsatmosphäre:

| | |
|---|---|
| $CH_4 \Rightarrow C + 2H_2$ | Methandissoziation |
| $2CO \Leftrightarrow C + CO_2$ | Boudouard-Reaktion |
| $CO + H_2 \Leftrightarrow C + H_2O$ | Heterogene Wassergasreaktion |

(fortgesetzt)

$CH_4 + CO_2 \Rightarrow 2CO + 2H_2$ Anreicherungsreaktion 1

$CH_4 + H_2O \Rightarrow CO + 3H_2$ Anreicherungsreaktion 2

Für eine Weiterentwicklung des gemäss der DE 10 2008 029 001.7-45 erreichten Fortschritts gegenüber dem Stand der Technik ist es bedeutend, die Kinetik und auch die Richtung dieser Reaktionen zu beeinflussen, weil diese stark von der Temperatur abhängig und letztere - wie oben ausgeführt - regelmäßig auf 850 - 950° C eingegrenzt ist, aber auch wesentlich unter diesen Temperaturen liegende nicht ermöglicht werden.

Da der Transport des Kohlenstoffträgers zum Bauteil in der Regel durch erzwungene Konvektion geschieht, trägt die kräftige Umwälzung der Atmosphäre innerhalb der Heizkammer zu einer Durchmischung und anschließenden Anströmung der Kohlenstoffträger an das Bauteil entscheidend bei.

So gilt für den Stoffübergang bei Anströmung einer flachen Werkstückplatte bekannterweise die Beziehung

$$\beta_L = 0{,}664 \cdot \sqrt{\frac{V \cdot L}{\nu}} \cdot \sqrt[3]{\frac{\nu}{D}} \cdot \frac{D}{L},$$

| | | |
|---|---|---|
| wobei | ein Diffusionskoeffizient | mit D |
| | eine Länge eines angeströmten Bauteils | mit L |
| | eine Strömungsgeschwindigkeit | mit V |
| | eine kinematische Viskosität | mit v |

bezeichnet ist.

Daraus folgt, dass mit wachsender Strömungsgeschwindigkeit der effektive Stoffübergangskoeffizient $\beta$ grösser wird, welche Beziehung noch effizienter zu nutzen ist.

Es musste weiter die bekannte Beziehung untersucht werden, dass die Diffusionsgeschwindigkeit durch die Strömungsgrenzschicht unabdingbar ist und nicht über die Veränderung der Strömungsgeschwindigkeit beeinflusst werden kann.

Hier ist die Höhe des Diffusionskoeffizienten im Gas entscheidend, der stark abhängig von der Temperatur und dem Druck ist. In erster Näherung gilt - ebenfalls bekannt -, dass eine Verdopplung des Druckes zur Halbierung des Diffusionskoeffizienten führt.

Die Dicke der Grenzschicht kann über die dem einschlägigen Fachmann bekannte Beziehung

$$\delta(x) = 4{,}64 \sqrt{\frac{\nu \cdot x}{V_\infty}}$$

| | | |
|---|---|---|
| mit | Stärke der Grenzschicht | $\delta$ (x) |
| | Abstand von der Bauteilkante | x |
| | Gasgeschwindigkeit in weiterer Entfernung vom Bauteil | $V_\infty$ |

ermittelt und erkannt werden, dass eine Erhöhung der Gasgeschwindigkeit die Dicke der Grenzschicht erniedrigt und auf diese Weise die Transportzeit an die Oberfläche reduziert. Auch diese Beziehung ist wirkungsmässig noch besser auszunutzen.

Schliesslich ist auch die Spaltreaktion des Kohlenmonoxids am Bauteil nach der bekannten Beziehung

$$CO \Rightarrow C + \frac{1}{2} O_2$$

die grundlegende Übertragungsreaktion für den Kohlenstoff für die Gasaufkohlung in $CO/H_2$-Gemischen neben noch weiteren Reaktionen, damit die Aufkohlungswirkung der Atmosphäre kontinuierlich erfolgen kann, wie dies zur Veranschaulichung an sich bekannter Erkenntnisse in Fig. 1 dargestellt ist.

Für nach diesen Erkenntnissen weiterzuentwickelnde Lösungen musste der schöpferische Ansatz technologisch neu umgesetzt und ausgebeutet werden, nämlich dass

- die Geschwindigkeit der Kohlenstoffübertragung von der Eigenschaft der Atmosphäre abhängig ist sowie
- der bei der Spaltung entstehende Sauerstoff zu binden und konvektiv zu entfernen ist.

Da hierzu Wasserstoff nötig ist, wird bei Vorhandensein einer ausreichend hohen Menge an Wasserstoff die Dissoziationsgeschwindigkeit des Kohlenmonoxids zum bestimmenden Parameter.

Die Geschwindigkeit der Aufnahme des Kohlenstoffs von der Werkstückoberfläche wiederum hängt von der Differenz der Kohlenstoffaktivitäten in der Atmosphäre und im Bauteil ab. Das heißt, wenn die Kohlenstoffaktivität im Gas höher ist als im Bauteil, erfolgt in der Summe ein Übergang des Kohlenstoffs in die Werkstückoberfläche.

In der Praxis kann diese Differenz bei Reineisen und unlegiertem Stahl durch den Unterschied zwischen dem C-Potential und dem Bauteil-Randkohlenstoffgehalt charakterisiert werden, wobei sich die Diffusion des Kohlenstoffs mit den hier nicht weiter wiederzugebenden Fick'schen Gesetzen beschreiben lässt.

Somit ist in eine neue erfinderische Aufgabenstellung einzubinden, dass die Diffusion von der Temperatur und dem Verlauf der Kohlenstoffkonzentration C im Werkstoff von der Tiefe x abhängig ist.

**Darlegung des Wesens der Erfindung**

Die Erfindung stellt sich nach diesen eingehenden Untersuchungen die Aufgabe, ein Verfahren zur Aufbereitung von Prozessgasen für Wärmebehandlungen von metallischen Werkstoffen/Werkstücken in Industrieöfen der beschriebenen Gattung zu schaffen, womit in deren mindestens eine Behandlungskammer mindestens eine der ein Prozessgas umfassenden Komponenten praktisch fertig aufbereitetet, wie auch vergleichmässigt und aufgeheizt zugeführt und mittels einer Vorrichtung sowohl an neu gefertigten als auch insbesondere an bereits betriebenen Einheiten von Industrieöfen angeschlossen werden kann, so dass in dem jeweiligen Industrieofen das Prozessgas für die Wärmebehandlung sparsam und emissionsarm verwendbar wird und unter Berücksichtigung der oben angeführten 6 Prozessschritte ideale Aufkohlungsbedingungen unter Beachtung der

- Temperatur,
- Anströmung der Bauteile,
- Homogenisierung der Gasphase und
- schnellen Reaktionskinetik

überall in der Behandlungskammer des Industrieofens gleichmäßig gegeben sind.

Im Unterschied zum Stand der Technik zielt die Erfindung deshalb darauf, bei Industrieöfen, insbesondere so genannten Atmosphärenöfen, in denen bisher die zuzuführenden Komponenten des aufzuheizenden Prozessgases regelmässig in der Behandlungskammer wie z.B. Heizkammer für eine aufkohlende oder carbonitrierende Wärmebehandlung der metallischen Werkstücke/Werkstoffe aufbereitet wurden, mit einem vorgeschalteten Verfahren und einer an den Industrieofen anschliessbaren Vorrichtung das Prozessgas derart praktisch vollständig aufzubereiten und dann direkt wirkend der Behandlungskammer zuzuführen, um den Wärmebehandlungsprozess für die Betreiber in der Industrie effizienter und umweltschonender durchzuführen sowie eine entsprechende technologisch nachrüstbare Einheit für ältere Industrieöfen zu schaffen.

Mit dieser Aufgabenstellung gehen die Überlegungen zu erfindungsgemässen Lösungen dahin, dass in der Behandlungskammer wie Heizkammer von zeitgemässen Industrieöfen eine Temperaturgleichmäßigkeit von mindestens +- 5°C eingehalten werden kann. Das heißt, dass nach Beendigung der Aufheiz- und Durchwärmphase alle austenitisierten Bauteile auf gleicher Temperatur sind.

Wenn noch spezielle Gasführungseinrichtungen innerhalb der Heizkammer angeordnet sind, ermöglichen diese bereits eine definierte Nutzung der restlichen konvektiven Wärmeübertragungsanteile, um die wichtige Gleichmäßigkeit der Temperatur im gesamten Chargenraum zu erreichen. In Einzelfällen sind damit sogar Toleranzen von +- 3°C möglich.

Die Herbeiführung einer idealen Temperaturgleichmäßigkeit ist nur mit einer optimalen Anströmung aller Bauteile möglich. Für eine hervorragende Temperaturgleichmäßigkeit ist deshalb ein weiteres oder besser anderes als bisher durchdachtes Umwälzungssystem erforderlich, was. als Einheit zu betrachten ist.

Zur Umwälzung kommt neben der Einstellung der Temperaturgleichmäßigkeit und der Anströmung der Bauteile mit Kohlungsgas noch ein dritter Aspekt wie die Homogenisierung der Atmosphäre und damit Aufrechterhaltung der notwendigen Gasreaktionen zur Einstellung einer gleichmäßigen Kohlenstoffaktivität (C-Pegel) im gesamten Chargenraum wie in der Behandlungskammer hinzu.

Die kontinuierliche Begasung mit Träger- und Anreicherungsgas hat immer in unmittelbarer Wirkung des Umwälzsystems zur Einstellung einer definierten Atmosphäre zu erfolgen.

Durch die permanente Wechselwirkung der Ofenatmosphäre mit der Werkstückoberfläche und dem dabei ablaufenden Kohlenstoffentzug des Gases verändert sich die Kohlenstoffaktivität (C-Pegel) der Atmosphäre fortlaufend, weshalb eine Messung dieser Größe unabdingbar ist. Sie geschieht mit Hilfe der Sauerstoffsonde (und Thermoelement) auf Basis einer Sauerstoffpartialdruckmessung. Zur C-Potentialregelung wird der Atmosphäre Erdgas (oder ein anderer Kohlenwasserstoff) oder Luft zugeführt.

Insofern verursacht die Aufkohlung der Bauteile und die dadurch notwendige Anreicherung der Prozessatmosphäre immer ein Ungleichgewicht innerhalb dieser. Die ausgewogene C-Pegel-Regelung muss trotz dieser lokal auftretenden Ungleichgewichte in der Generierung einer insgesamt ausgeglichenen Atmosphäre zu einem quasistationären Gleichgewicht führen, was in dem erfindungswesentlichen Kreisprozess der Gasaufkohlung gemäss Fig. 2 zum besseren Verständnis der Aufgabenstellung der Erfindung dargestellt ist.

Darin sind die für die Aufkohlung verantwortlichen Aufkohlungsreaktionen, die alle zur Bildung des aufkohlend wirkenden Kohlenmonoxids führen, auf der linken Seite dargestellt.

Eine Kohlungsreaktion ist der Fig. 2 rechts oben zu entnehmen, nämlich die ungleichgewichtige Aufkohlung durch die Methandissoziation. Durch eine lokal unzulässig hohe Aufkonzentration von Methan in der CO- und $H_2$-haltigen Prozessatmosphäre kann es zu partiellen Überkohlungen an den Bauteilen kommen, die dann wiederum Restaustenit und/oder Carbidbildung verursachen. Die Methandissoziation wird in der Regel sensorisch nicht erfasst und wird meistens daher als Störfaktor während des Prozesses nicht wahrgenommen.

Jedoch kann gemäss einem internen Entwicklungsstand das Zusammenspiel zwischen Begasung und Regelung eine Gleichförmigkeit des C-Pegels innerhalb der Atmosphäre erreicht werden, die sich durch Einhaltung einer Toleranz von +- 0,05% C beim Randkohlenstoffgehalt des Werkstückes definiert und eine gleichmäßige Aufkohlung der Randschicht zur Folge hat.

Geht der Fachmann von den zur Zeit erreichbaren Wirkungsgraden der gängigen Aufkohlungsbegasungen aus, muss er sich in Erinnerung rufen, dass in betriebenen Industrieöfen

- thermische Verluste wie beim Abfackeln des Schutzgases am Abbrand eintreten und
- annähernd 98% des zugeführten Kohlenstoffs überhaupt nicht für die Aufkohlung zur Verfügung stehen, sondern einfach nur abgebrannt werden, wonach
- der Wirkungsgrad der Aufkohlung damit bei weniger als 2% liegt und
- sich andere Technologien wiederum mit der Nutzung der an die Umgebung abgegebenen Heizenergie befassen.

Schon gemäss der oben zitierten DE 10 2008 029 001.7-45 wurde ein neues Begasungsverfahren geschaffen, bei dem das Schutzgas nicht mehr abgebrannt, sondern durch eine Rezirkulation wieder der Heizkammer zugeführt wird, nachdem es einen Zwischenschritt wie die Aufbereitung durchlaufen hat und somit nicht mehr gespült, sondern wieder verwendet wird.

Erfindungsgemäss soll nun noch ein entscheidender Schritt weiter gegangen werden, in dem nochmals die durch die Aufkohlung innerhalb der Heizkammer ablaufenden Reaktionen, wie

$$2CH_4 + O_2 \Rightarrow 2CO + 4H_2$$

$$CH_4 + CO_2 \Rightarrow 2CO + 2H_2$$

$$CH_4 + H_2O \Rightarrow CO + 3H_2$$

hinsichtlich weiterer Störfaktoren, aufgedeckt wurden:
Es war demnach zu erreichen, dass

- die katalytischen Potentiale besser zu nutzen sind,
- die eigentlich erforderliche Ofenraumtemperatur ab 850°C nicht zum Nachteil der Reaktionen zur an sich vorteilhaften Wiederaufbereitung von bereits "verbrauchtem" Schutzgas führt,
- die katalytische Wirkung unabhängig von der Ofenraumtemperatur zu gewährleisten ist, d.h. wesentlich über aber auch unter diesen Temperaturen liegend, und
- das Anreichungsgas direkt durch den Katalysator zu schicken und nicht zuerst in den Ofenraum zu geben ist.

Anders als bisher soll nun durch die Erfindung die Erzeugung und Anreicherung des Schutzgases als separate

Aufbereitung und getrennt von der Charge erfolgen, sodass die Charge immer mit einer homogenen Gasatmosphäre beaufschlagt werden kann. Es kommt somit nicht zu einer Schlierenbildung bzw. zu Inhomogenitäten durch Einspeisung von Erdgas zwecks Anreicherung in die Heizkammer. Ungewünschte lokale Überkohlungen, etwa durch ungleichgewichtige Aufkohlung aufgrund besagter Methandissoziation sind praktisch auszuschliessen.

Die Umweltfreundlichkeit des Verfahrens zeigt sich bei der $CO_2$-Bilanz. Durch die hohen Prozessgaseinsparungen sinken die $CO_2$-Emissionen deutlich.

Wenn bisher die aus der DE 10 2008 029 001.7-45 gewonnenen Erkenntnisse noch nicht für eine breite Palette von bereits im Einsatz befindlichen Industrieöfen der eingangs beschriebenen technologischen Gattung genutzt werden konnten, erschliesst sich nun noch ein weiterer Anwendungsbereich, und zwar durch die Nachrüstbarkeit an vorhandenen Industrieöfen mit sogar noch höherer Effizienz gegenüber dem Verfahren entsprechend der DE 10 2008 029 001.7-45. Vor allen Dingen kann der bei den Betreibern vorhandene ältere Bestand an Industrieöfen, die weiterhin betriebsfähig sind, erfindungsgemäss aufgerüstet werden.

Aufbauend auf den oben analysierten Stand der Technik können mit den neu gewonnenen Erkenntnissen nun für eine breite Palette von bisher im Einsatz befindlichen Industrieöfen der eingangs beschriebenen technologischen Gattung genutzt werden. Zwar wurden teilweise derartige Lösungen , wie z.B. mittels einer im Industrieofen integrierten Schutzgasretorte mit Katalysatorbett, realisiert, jedoch nur als integrierte Bestandteile von Ofeneinheiten und unter der nachteiligen Zuführung von Anreicherungsgas sowie ohne eine Gasrezirkulation.

Typisch und nachteilig war dabei auch, dass die Aufbereitung besagter Prozessgase stets unter den Bedingungen in der jeweiligen Behandlungskammer wie Heizkammer und unmittelbar zugeordneten Funktionseinheiten erfolgte. Somit konnte weder unter höheren noch unter niedrigeren Temperaturbedingungen aufbereitet werden.

Mit der Erfindung kann nun der bei den Betreibern vorhandene ältere Bestand an Industrieöfen, die weiterhin betriebsfähig sind, aber bisher nicht mit den betriebswirtschaftlich/technologischen und ökologischen Vorteilen betrieben werden, den Umweltbedingungen gerecht werdend und unter sparsamem Umgang mit Energieträgern betrieben werden.

Die Erfindung schafft ein Verfahren zur Aufbereitung von Prozessgasen für Wärmebehandlungen von metallischen Werkstoffe/Werkstücken in Industrieöfen, gemäß Anspruch 1, womit in deren mindestens eine Behandlungskammer, mindestens eine der ein Prozessgas umfassenden Komponenten praktisch fertig aufbereitetet, wie auch vergleichmässigt und aufgeheizt zugeführt und mittels einer Vorrichtung gemäß Anspruch 26, sowohl an neu gefertigten als auch insbesondere an bereits betriebenen Einheiten von Industrieöfen angeschlossen werden kann, so dass in dem jeweiligen Industrieofen das Prozessgas für die Wärmebehandlung sparsam und emissionsarm verwendbar wird.

Im Unterschied zum Stand der Technik bewirkt die Erfindung, dass bei Industrieöfen, insbesondere so genannten Atmosphärenöfen, in denen bisher die zuzuführenden Komponenten des aufzuheizenden Prozessgases in der Behandlungskammer wie Heizkammer für eine aufkohlende Wärmebehandlung der metallischen Werkstücke/Werkstoffe aufbereitet wurden, nun durch ein vorgeschaltetes Verfahren und einer an den Industrieofen anschliessbaren Vorrichtung das Prozessgas derart wie oben begründet aufbereitet wird, wobei der eigentliche Aufbereitungsprozess bei höheren Reaktionstemperaturen bis zu ca. 1250° C und auch bei wesentlich niedrigeren Reaktionstemperaturen, also höher oder niedriger als die in der Behandlungskammer liegenden 850° C - 950° C, und dabei vor allen Dingen beschleunigten Reaktionen, wie Anreicherung und Erzeugung z.B. gemäss

$$2CH_4+O_2 \rightarrow 2CO+4H_2$$

$$CH_4+CO_2 \rightarrow 2CO+2H_2$$

$$CH_4+H_2O \rightarrow CO+3H_2$$

ablaufen und begünstigt werden, um dann dieses Prozessgass direkt wirkend der Behandlungskammer des Industrieofens zuzuführen, sodass dort die Reaktionen der Aufkohlung, wie z.B.

$$2CO \rightarrow C+CO_2$$

$$CO+H_2 \rightarrow C+H_2O$$

$$CO \rightarrow C+ 0{,}5O_2$$

bei den üblichen besagten Temperaturen direkt wirkend ablaufen können.

Dabei können in Abhängigkeit entsprechender Wärmebehandlungsverfahren und der Gaskomponenten für die Aufbereitung des Prozessgases und seinen behandlungsbedingten Verbrauch im Sinne des Kerngedankens der Erfindung auch andere Reaktionsbeziehungen ablaufen, die dem obigen Kerngedanken der Erfindung folgen.

Der gesamte Wärmebehandlungsprozess für die Betreiber in der Industrie kann somit noch effizienter und

umweltschonender durchgeführt werden, wofür erfindungsgemäss die entsprechende technologisch nachrüstbare Einheit für ältere Industrieöfen geschaffen wurde.

Zusammengefasst stellt sich der Verfahrensablauf nach der Erfindung so dar, dass das Prozessgas, welches mindestens aufweist

◦ ein erstes Behandlungsmedium wie Schutzgas, welches neben den Mindestkomponenten Kohlenstoffmonoxid, Wasserstoff und Stickstoff auch die Komponenten Kohlenstoffdioxid, Sauerstoff und Wasserdampf aufweist und

◦ ein zweites Behandlungsmedium wie Reaktionsgas, welches zu einer aufkohlenden oder carbonitrierenden Behandlung führt,

a) in mindestens einer seiner für die Wärmebehandlung erforderlichen Eigenschaften, wie chemischen Reaktionen, Temperaturen, Drücken oder Strömungsgeschwindigkeiten ausserhalb der Behandlungskammer und des Industrieofens in einem Aufbereitungsraum einer externen Baueinheit unter Temperaturen auf bis zu 1250° C und unter Verwendung eines Verdichters gemäss z.B. den Reaktionen

$$2CH_4+O_2 \rightarrow 2CO+4H_2$$

$$CH_4+CO_2\rightarrow 2CO+2H_2$$

$$CH_4+H_2O\rightarrow CO+3H_2$$

separat aufbereitet wird, so dass dabei die Komponenten, wie Kohlenstoffdioxid, Sauerstoff und Wasserdampf mit Kohlenwasserstoff als Reaktionsgas zu Kohlenstoffmonoxid und Wasserstoff katalytisch reagieren und nach dieser Reaktion das Schutzgas ein erforderliches C-Potential aufweist, wonach

b) aus dem Aufbereitungsraum der externen Baueinheit mittels des Verdichters das so aufbereitete Prozessgas der Behandlungskammer im Industrieofen verdichtet, vergleichmäßigt und beschleunigt sowie auf die Werkstoffe/Werkstücke gerichtet mittels Einpunkt- oder Mehrpunkt-Einspeisung gesteuert zugeführt wird und dort die aufkohlende oder carbonitrierende Behandlung gemäss z.B. der Reaktion

$$2CO \rightarrow C+CO_2$$

$$CO+H_2\rightarrow C+H_2O$$

$$CO \rightarrow C+ 0{,}5O_2$$

durchgeführt wird, wobei

c) in der Behandlungskammer mindestens ein Behandlungsmedium des Prozessgases rezirkulierend geführt und zur Aufbereitung gemäss Schritt a) zurückgewonnen wird.

Mit dem Verfahren kann ein höher aber auch niedriger aufgeheiztes, verdichtetes, homogenisiertes Prozessgas bereitgestellt werden, welches mit mindestens einem zweiten Behandlungsmedium wie Reaktionsgas mit den Komponenten Kohlenwasserstoff während der Wärmebehandlung zu einer aufkohlenden Behandlung der Werkstücke/Werkstoffe oder deren Behandlungsmedium führt, wobei dort mindestens ein Behandlungsmedium des der Behandlungskammer des Industrieofens zugeführten Prozessgases in der Behandlungskammer für die separierte Wiederaufbereitung rezirkuliert.

In besagter Baueinheit erfolgt die separate Aufbereitung des Prozessgases zu einer wärmebehandlungsoptimierten, mittels des Verdichters Strömungswiderstände überwindender Umwälzung/Mischung unter katalytischer Reaktion für die dann folgende, unmittelbare Verwendung bei der Wärmebehandlung im Industrieofen.

Das Prozessgas ist also für die Wärmebehandlung im Industrieofen bereits vollständig reagiert, verdichtet, vergleichmäßigt und beschleunigt vorbereitet, so dass die aufkohlende Einwirkung auf die Werkstücke/Werkstoffe in der Behandlungskammer des Industrieofens direkt erfolgen kann, ohne die Reaktionen und Aufbereitung wie bisher in der Behandlungskammer und danach die Steuerung/Regelung des Behandlungsmediums in Abhängigkeit vom C-Pegel in Relation zu den zu behandelnden Werkstücken/Werkstoffen durchführen zu müssen.

Es wird somit sofort in der Behandlungskammer ein den Wirkungsgrad der Wärmehandlung erhöhender Behandlungsimpuls mittels integrierter Überwachung/Messung/Steuerung/Regelung der Atmosphäre in der Behandlungskammer oder Temperatur des Prozessgases nach mindestens einem der Parameter, wie Temperatur, CO-Gehalt oder Druck in der Behandlungskammer erzeugt. Dabei wird die Überwachung/Messung/Steuerung/Regelung durch mindestens einen der Parameter, wie Sauerstoffpartialdruck, $CO_2$-Gehalt und Taupunkt der Atmosphäre in der Behandlungskammer weiter unterstützt.

Nach diesem Verfahren kann vorteilhaft mindestens einem Behandlungsmedium des aufzubereitenden Prozessgases aus einem Kaltbereich Luft zugeführt werden.

Das Verfahren ist dadurch ausgebildet, dass das aufbereitete Prozessgas wieder aus der Behandlungskammer in die externe Baueinheit angesaugt, dort wie zuvor aufbereitet und wieder in die Behandlungskammer des Industrieofens zurück befördert wird.

Für die beschleunigende und verdichtende Umwälzung/Mischung mindestens eines der Behandlungsmedien des Prozessgases wird mindestens dem einen in der externen Baueinheit befindlichen Verdichter Luft aus einem Kaltbereich zugeführt.

Zur Steuerung und Regelung wird ein Programm verwendet, welches von mindestens einem Behandlungsmedium des Prozessgases wie z.B. der Atmosphäre in der Behandlungskammer segmentweise eine gepulste, getaktete und/oder konstante Zugabe eines anderen Behandlungsmediums wie z.B. Reaktionsgas durchführt.

Wenn nun durch die Aufkohlung innerhalb der Heizkammer die Konzentrationen von $CO_2$, $H_2O$ und $O_2$ ansteigen und der C-Pegel abfällt wird dieses abgereicherte Gas zurück in die Aufbereitungskammer geleitet, die separiert und damit lokal von der Heizkammer getrennt ist.

Hier erfolgt durch die feindosierte Zugabe von Erdgas eine C-Pegel-Anreicherung, wobei die benannten Reaktionen, wie

$$2CH_4 + O_2 \Rightarrow 2CO + 4H_2$$

$$CH_4 + CO_2 \Rightarrow 2CO + 2H_2$$

$$CH_4 + H_2O \Rightarrow CO + 3H_2$$

ablaufen und die besagten Konzentrationen wieder fallen.

Die Zugabe von Erdgas in die Aufbereitungskammer erfolgt aber nur dann, wenn das C-Potential abnimmt. Solange keine Anreicherung notwendig ist, wird kein Erdgas nachgeführt.

Nur dann, wenn das C-Potential durch Aufkohlung der Bauteile (und nicht wie bisher durch das Ausspülen) abnimmt, muss Erdgas als Anreicherung in kleinster Menge eingespeist werden. Im idealen Betriebszustand wird also nur soviel Kohlenstoff in Form von Erdgas zugeführt, wie für die Aufkohlung des Bauteils notwendig ist, wobei zum Absenken des C-Pegels Luft eingespeist werden kann.

Für den prozesssicheren Betrieb eines Industrieofens wird kein zusätzlicher Schutzgaserzeuger erforderlich, weil diese Aufgabe die externe Aufbereitungskammer übernimmt.

Der Prozessablauf der Wärmebehandlung stellt sich so dar, dass nach dem Beladen der Heizkammer mit der Charge von Werkstoffen/Werkstücken während des Aufheizvorgangs zunächst für einen definierten Zeitraum eine Spülbegasung mit selbst erzeugtem Schutzgas durchgeführt wird, um die gewünschte Ofenatmosphäre schnell wieder herzustellen. Dazu wird ein Erdgas-Luft-Gemisch in die Aufbereitungskammer eingespeist, ein Magnetventil zu einem mit Zündbrenner versehenen Abbrand geöffnet und der Ofen mit Schutzgas gespült. Nach Ablauf der Spülzeit werden alle Ventile am Abbrand geschlossen und die Rezirkulation gestartet. Damit wird das Schutzgas rezirkulierend zur externen Aufbereitungskammer der separaten Baueinheit geführt und kann mittels Zudosierung von Erdgas auf den gewünschten C-Pegel eingestellt und aufbereitet werden.

Die Einspeisung des fertig aufbereiteten Schutzgases in die Heizkammer erfolgt über mehrere Stellen wie Mehrpunkteinspeisung innerhalb der Heizkammer. Damit lässt sich dort schneller eine homogene Gasatmosphäre einstellen, als es mit den herkömmlichen Verfahren der Fall war. Ausserdem kann mit einer wählbaren Einpunkt- oder Mehrpunkteinspeisung die Geometrie der Behandlungskammer günstig ausgestaltet werden.

Hierbei zeigt sich der oben erwähnte und mit entscheidende Vorteil des Verfahrens. Die Erzeugung und Anreicherung des Schutzgases erfolgt getrennt von der Charge, d.h. die Charge wird immer mit einer homogenen Gasatmosphäre beaufschlagt. Es kommt nicht zur Schlierenbildung bzw. zu Inhomogenitäten durch Einspeisung von Erdgas zur Anreicherung in die Heizkammer, womit ungewünschte lokale Überkohlungen, etwa durch ungleichgewichtige Aufkohlung aufgrund von Methandissoziation ausgeschlossen werden.

Aufgrund der Zufuhr von Erdgas zur Kompensation der Aufkohlung ist der CO-Gehalt während der Behandlung nicht konstant. Daher ist zur Regelung ein CO-Analysator erforderlich. Bei Unterschreitung eines Minimalwertes besteht immer die Möglichkeit durch eine kurzzeitige Spülphase den CO-Gehalt wieder anzuheben. Im Prozessverlauf fallen die Konzentrationen von CO und $H_2$ während der Überkohlungsphase zunächst ab bzw. steigen an, weil bisher verhältnismässig viel $CH_4$ benötigt wurde, um den Rand der zu behandelnden Bauteile zunächst aufzufüllen.

Im erfindungsgemässen Prozessverlauf verhält sich dies vorteilhaft, so dass weniger Anreicherung benötigt wird. In der Diffusionsphase, in der der geringste Bedarf nach Anreicherungsgas besteht, entsprechen die Konzentrationen somit ungefähr der normalen Reaktionsgaszusammensetzung.

Es wurde damit ein praktisch selbstregulierendes, adaptives Begasungssystem geschaffen, bei dem nur dann Erdgas als Anreicherung eingespeist wird, wenn das C-Potential der Atmosphäre durch Bauteilaufkohlung und nicht etwa durch Spülverluste abnimmt.

Der gemäss Fig. 2 dargestellte und optimal anzustrebende Kreisprozess zur Realisierung deutlicher Prozessgaseinsparungen wird mit der Erfindung erfüllt.

Die zur Durchführung des Verfahrens gehörende, zu verwendende externe Baueinheit umfasst in einem Gehäuse im Wesentlichen

a) eine schliessbare Aufbereitungskammer mit Katalysator und Temperaturregeleinrichtung für die Aufbereitung der Prozessgase, die mittels je lösbarer und verschliessbarer Zuleitung für ein in die Behandlungskammer des Industrieofens einzuführendes aufbereitetes Prozessgas und verschliessbarer Ableitung für ein Behandlungsmedium aus einem Bereich oder der Behandlungskammer des Industrieofens,

b) ein der Aufbereitungskammer zugeschalteter und in die Zuleitung funktional eingebundener gebläseartiger Verdichter mit Antrieb,

c) ein funktional mit der Behandlungskammer des Industrieofens, der Aufbereitungskammer und dem Verdichter verbundenes Equipment für die Messung der Zufuhr der Behandlungsmedien des Prozessgases, des Druckes in der Behandlungskammer, der Drehzahl des Verdichters und Temperatur der Katalysatoren und

d) eine zugeordnete Schalteinheit für die Steuerung und Regelung der Parameter, wie Druck, Temperatur, Volumenstrom des in der Aufbereitungskammer aufzubereitenden Prozessgases hinsichtlich der Zuführung von Behandlungsmedien, Zuführung des aufbereiteten Prozessgases in die Behandlungskammer des Industrieofens und des C-Pegels.

Aus der Sicht des auf diesem Gebiet tätigen Fachmanns sind diese Reaktionen so zu verstehen, dass zur Regelung des Kohlenstoffpotentials selbstverständlich auch Luft und benanntes Kohlenwasserstoffgas verwendet werden. Das heißt, dass eine Luftmenge eingespeist wird, wenn der C-Pegel sinken soll; andererseits wird bei gewünschtem Anstieg des C-Pegels ein Kohlenwasserstoffgas zugeführt.

In diesem Rahmen stellt sich der Gesamtumfang der Erfindung im Detail seiner Auswahlvarianten wie folgt dar: Kern des Verfahrens zur Aufbereitung von Prozessgasen für Wärmebehandlungen von metallischen Werkstoffen/Werkstücken in Behandlungskammern wie Heizkammern von Industrieöfen ist, das ein jeweiliges Prozessgas bei von der Temperatur in der Behandlungskammer entkoppelten Temperaturen in einem vom Wärmebehandlungsprozess in der Behandlungskammer separierten Prozess in einem Temperaturbereich von wesentlich unter den Temperaturen in der Heizkammer liegenden bis zu einer Temperatur von ca. 1250°C aufbereitet werden kann.

In der Regel ist das Prozessgas ein nach dem Wärmebehandlungsprozess oder thermochemischen Behandlung verbrauchtes Prozessgas, und es wird in dem separierten Prozess aufbereitet.

Die Anreicherung und Erzeugung von Prozessgasen erfolgt gemäss mindestens einer oder wirkungsgleichen Reaktionsbeziehung wie z.B.

$$2CH_4 + O_2 \Rightarrow 2CO + 4H_2$$

$$CH_4 + CO_2 \Rightarrow 2CO + 2H_2$$

$$CH_4 + H_2O \Rightarrow CO + 3H_2$$

separat in einem Aufbereitungsschritt.

Nach einem Prozessschritt einer Aufkohlung oder Wärmebehandlung gemäss mindestens einer oder wirkungsgleichen Reaktionsbeziehung wie z.B.

$$2CO \rightarrow C + CO_2$$

$$CO + H_2 \rightarrow C + H_2O$$

$$CO \rightarrow C + 0{,}5O_2$$

wird das verbrauchte Prozessgas der Behandlungskammer wieder zugeführt.

Der Ablauf des Aufbereitungsschritts und der Prozessschritte der Wärmebehandlung, thermochemischen Behandlung oder Aufkohlung erfolgen in einem rezirkulierenden Kreislauf, und zwar durch den Aufbereitungsschritt in einer von der Behandlungskammer des Industrieofens separierten Aufbereitungskammer mit Katalysator und Temperaturregeleinrichtung.

Dafür wird eine externe Baueinheit verwendet werden, die die Aufbereitungskammer mit Katalysator und die Temperaturregeleinrichtung aufweist, die eine externe Baueinheit insbesondere für nachzurüstende Industrieöfen vorteilhaft ist.

Das verbrauchte Prozessgas kann über eine Ableitung aus der Behandlungskammer zu der Aufbereitungskammer abgesaugt und das aufbereitete Prozessgas aus der Aufbereitungskammer über eine Zuleitung zu der Behandlungskammer verdichtet zugeführt werden.

Es wird mindestens ein Prozessgas-Verdichter verwendet, welcher den rezirkulierenden Kreislauf des Absaugens des verbrauchten Prozessgases und die Zuführung des aufbereiteten Prozessgases beschleunigt und mindestens letzteres homogenisiert, verdichtet und mit erhöhtem Aktivierungsgrad fördert. Mindestens ein Prozessgas-Verdichter ist in den Aufbereitungsschritt funktional eingebunden, und es kann ein Turbolader als Prozessgas-Verdichter eingesetzt werden. Die Verwendung eines Kolbenverdichters als Prozessgas-Verdichter ist möglich.

Somit kann die Aufbereitung von Prozessgasen für Wärmebehandlungen von metallischen Werkstoffen/Werkstücken in Behandlungskammern von Industrieöfen, welches Prozessgas mindestens

- ◦ ein erstes Behandlungsmedium wie Schutzgas, welches neben den Komponenten Kohlenstoffmonoxid, Wasserstoff und Stickstoff auch die Komponenten Kohlenstoffdioxid, Sauerstoff und Wasserdampf aufweisen kann, und

- ◦ ein zweites Behandlungsmedium wie Reaktionsgas, welches zu einem thermochemischen Prozess führt,

umfasst, wobei wie folgt ablaufen:

a) Im Aufbereitungsschritt wird das Prozessgas hinsichtlich mindestens einer seiner für die Wärmebehandlung erforderlichen Eigenschaften, wie chemischen Eigenschaften, Temperaturen, Drücken oder Strömungsgeschwindigkeiten ausserhalb der Behandlungskammer und des Industrieofens in der separaten Baueinheit aufbereitet, dabei

b) reagieren z.B. die Komponenten, wie Kohlenstoffdioxid, Sauerstoff und Wasserdampf mit Kohlenwasserstoff als Reaktionsgas zu Kohlenstoffmonoxid und Wasserstoff katalytisch und nach dieser Reaktion weist das Schutzgas ein geregeltes C-Potential auf, wobei

c) das C-Potential hinsichtlich mindestens einer der Parameter, wie Temperatur, Druck und Strömungsgeschwindigkeit in Abhängigkeit von den Bedingungen in der Behandlungskammer geregelt und unter Verwendung des Prozessgas-Verdichters das aufbereitete Prozessgas der Behandlungskammer verdichtet, vergleichmäßigt und beschleunigt sowie auf die Werkstoffe/Werkstücke mittels Ein- oder Mehrpunkt-Einspeisung gerichtet und gesteuert zugeführt wird, und

d) in der Behandlungskammer wird mindestens ein Behandlungsmedium des Prozessgases rezirkulierend geführt und für die Aufbereitung in der separaten Baueinheit zurückgewonnen.

Den Behandlungsmedien des aufzubereitenden Prozessgases können aus einem Kaltbereich Luft zugeführt werden.

Das verbrauchte Prozessgas oder mindestens eines seiner Behandlungsmedien wird aus der Behandlungskammer angesaugt und aufbereitet wieder in die Behandlungskammer zurückgeführt.

Für die strömungsbeschleunigende und verdichtende Umwälzung mindestens eines Behandlungsmediums des aufzubereitenden Prozessgases wird mindestens ein Prozessgas-Verdichter verwendet, dem Luft aus einem Kaltbereich zur Kühlung zugeführt werden kann. Der Prozessgas-Verdichter kann durch ein Gebläse angetrieben werden.

Die verdichtende, vermischende/vergleichmäßigende und/oder beschleunigende Führung des Prozeßgases erfolgt gerichtet zu den zu behandelnden Werkstoffen/Werkstücken der Charge über die Einpunkt- oder Mehrpunkteinspeisung, welche der Behandlungskammer des jeweiligen Ofentyps angepasst werden kann. Strömungsoptimierende Leiteinrichtungen können die gerichtete Führung des Prozeßgases zu den Werkstücken/Werkstoffen unterstützen.

Denkbar ist, dass das Prozessgas oder mindestens eines der Behandlungsmedien aus mindestens einem weiteren Industrieofen oder einer weiteren Behandlungskammer abgezweigt wird.

Zur Steuerung und Regelung einschliesslich der Überwachung der Prozessatmosphäre in der Behandlungskammer des Industrieofens oder der Temperatur des Prozessgases wird ein Equipment mit mindestens einem der Elemente, wie Sonden, Analysatoren und Sensoren verwendet, welche die Temperatur und den CO - Gehalt sowie den Druck in der Behandlungskammer und mindestens einen weiteren der Parameter, wie Sauerstoffpartialdruck, $CO_2$ - Gehalt und Taupunkt der Atmosphäre in der Behandlungskammer messen sowie danach die Aufbereitung des Prozessgases in der Aufbereitungskammer regeln und die Zuführung oder Abführung in Abhängigkeit von der Rekonditionierungszeit von mindestens einem Behandlungsmedium aus der Behandlungskammer steuern.

Die Rekonditionierungszeit kann in Abhängigkeit von mindestens einem der Parameter, wie

a) Drehzahl des Verdichters und
b) Anzahl der Zyklen, die das Prozess-Gas direkt aufeinanderfolgend die Aufbereitungskammer mit Katalysator durchläuft,

gesteuert werden.

Es kann ein Programm für die segmentweise Steuerung und Regelung von mindestens einem Behandlungsmedium des aufzubereitenden Prozessgases für die Atmosphäre in der Behandlungskammer durch mindestens eine gepulste, getaktete oder konstante Zugabe von mindestens einem der Behandlungsmedien wie Reaktionsgase verwendet werden.

Mindestens ein Behandlungsmedium des Prozeßgases kann für mehrere Industrieöfen oder Behandlungskammern verwendet werden.

In mindestens einem Prozessschritt können Teilmengenströme des Prozessgases erzeugt und gesteuert werden.

Zur Durchführung des Verfahrens umfasst die Vorrichtung eine schliessbare Aufbereitungskammer mit Katalysator und Temperaturregeleinrichtung für die Aufbereitung der Prozessgase, den funktional eingebundenen Prozessgas-Verdichter, ein funktional mit der Behandlungskammer des Industrieofens, der Aufbereitungskammer und dem Prozessgas-Verdichter verbundenes Equipment für die Messung der Zufuhr der Behandlungsmedien des Prozessgases und eine Schalteinheit für die Steuerung und Regelung mindestens eines der Parameter des in der Aufbereitungskammer aufzubereitenden Prozessgases hinsichtlich der Zuführung von Behandlungsmedien, Zuführung des aufbereiteten Prozessgases in die Behandlungskammer des Industrieofens und des C-Pegels sowie Abführung mindestens eines der Behandlungsmedien.

Die Vorrichtung umfasst als separate Baueinheit

a) ein Gehäuse mit der schliessbaren Aufbereitungskammer, dem Katalysator und der Temperaturregeleinrichtung, welches Gehäuse mindestens je eine lösbare und verschliessbare Zuleitung für das in die Behandlungskammer des Industrieofens einzuführende aufbereitete Prozessgas oder deren Komponenten wie Behandlungsmedien und eine Ableitung für mindestens ein Behandlungsmedium aus einem Bereich oder der Behandlungskammer des Industrieofens aufweist,
b) das Equipment für die Messung der Zufuhr der Behandlungsmedien des Prozessgases, des Druckes in der Behandlungskammer, der Drehzahl des Prozessgas-Verdichters, Ansteuerung von Mitteln wie Klappen zur Erzeugung eines Teilmengenstromes des Prozessgases und der Temperatur des Katalysators und
c) die Schalteinheit für die Steuerung und Regelung der Parameter, wie Druck, Temperatur, Volumenstrom des in der Aufbereitungskammer aufzubereitenden Prozessgases wobei der Behandlungskammer der Prozessgas-Verdichter zugeordnet sein kann.

Bevorzugterweise ist es auch möglich der Aufbereitungskammer den Prozessgas-Verdichter zuzuordnen.

Bevorzugt für erfindungsgemässe Nachrüstungen wird die Ausbildung als eine an einen vorhandenen Industrieofen extern anschliessbare separate Baueinheit.

Die jeweilige Baueinheit kann eine Auskleidung mit einem keramischen Werkstoff aufweisen.

Das Equipment ist im Einzenen mit mindestens einem der Elemente, wie

d) Sonden, Analysatoren und Sensoren für die Messung einer Temperatur, eines CO - Gehalts sowie eines Druckes in der Behandlungskammer und mindestens eines weiteren der Parameter, wie Sauerstoffpartialdruck, $CO_2$ - Gehalt und Taupunkt der Atmosphäre in der Behandlungskammer,
e) einer Schalteinheit (2.5) als Steuer- und Regeleinrichtung für die Aufbereitung des Prozessgases (3) in der Aufbereitungskammer (2.2) und die Steuerung der Zuführung oder Abführung in Abhängigkeit von der Rekonditionierungszeit und
f) Mittel zur Steuerung einer Verweilzeit, Zyklen oder eines Teilmengenstromes des Prozessgases (3) in der Aufbereitungskammer (2.2) oder der Behandlungskammer (1.1)

ausgestattet.

## Kurze Beschreibung der Zeichnungen

In den Zeichnungen zeigen

Fig. 1 eine schematische Darstellung einer Aufkohlungsreaktion an einer Bauteiloberfläche sowie deren Folgereaktionen in der Ofenatmosphäre nach dem erläuterten Stand der Technik,

Fig. 2 eine schematische Darstellung der prinzipiell vorbekannten Reaktionen in einer gemäss der DE 10 2008 029 001.7-45 ausgeführten Behandlungs- und Aufbereitungskammer mit Rezirkulation des aufbereiteten Gases und

Fig. 3 eine schematische Darstellung eines erfindungsgemässen Beispiels eines entsprechend dem Verfahren und mit der Vorrichtung zur Aufbereitung von Prozessgasen betriebenen Industrieofens.

## Bester Weg zur Ausführung der Erfindung

In Fig. 3 ist eine erfindungsgemäss ausgeführte Anlage eines z.B. nachrüstbaren Industrieofens 1 schematisch dargestellt. Der Industrieofen 1 weist eine Behandlungskammer 1.1, eine so genannte Multipointeinspeisung als Mehrpunkteinspeisung 1.2 und einen Abschreckbereich 1.3 auf.

Oberhalb der Behandlungskammer 1.1 ist ein Behandlungskammerumwälzer 1.4 angeordnet.

Zu der Behandlungskammer 1.1 führt eine Zuleitung 1.5 für ein Prozessgas 3 und von der Behandlungskammer 1.1 führt eine Ableitung 1.6 für die Absaugung mindestens eines ersten Behandlungsmediums 3.1 des Prozessgases 3.

Eine externe Baueinheit 2 umfasst ein Gehäuse 2.1 mit einer Aufbereitungskammer 2.2, die einen Katalysator 2.2.1 und eine Temperaturregeleinrichtung 2.2.2 aufweist. Die Aufbereitungskammer 2.2 ist über die Zuleitung 1.5 für das Prozessgas 3 mit der Behandlungskammer 1.1 verbunden. Der Aufbereitungskammer 2.2 ist in der Ableitung 1.6 - einerseits für eine beschleunigte Absaugung mindestens eines ersten Behandlungsmediums 3.1 des Prozessgases 3 aus der Behandlungskammer 1.1 - ein Prozessgas-Verdichter 2.3 vorgeschaltet, der z.B. als Turbolader ausgebildet sein kann. Der Prozessgas-Verdichter 2.3 sorgt andererseits für eine hochverdichtete Aufbereitung des Prozessgases 3 in der Aufbereitungskammer 2.2 und die hochverdichtete Zuführung des aufbereiteten Prozessgases 3 in die Behandlungskammer 1.1.

Ein Equipment 2.4 für die Messung der Zufuhr von Behandlungsmedien 3.1, 3.2 des Prozessgases 3, des Druckes in der Behandlungskammer 1.1, Drehzahl des Prozessgas-Verdichters 2.3 und der Temperatur des Katalysators 2.2.1 ist sowohl mit der Behandlungskammer 1.1 als auch mit einer Schalteinheit 2.5 für die Steuerung und Regelung der Parameter, wie Druck, Temperatur, Volumenstrom des in der Aufbereitungskammer 2.2 aufzubereitenden Prozessgases 3 hinsichtlich der Zuführung von Behandlungsmedien 3.1, 3.2 und Luft 3.3, Zuführung des aufbereiteten Prozessgases 3 in die Behandlungskammer 1.1 des Industrieofens 1 und des C-Pegels sowie Abführung mindestens eines der Behandlungsmedien 3.1, 3.2 verbunden.

Mit dieser Anlage wird das erfindungsgemässe Verfahren zur Aufbereitung des jeweiligen Prozessgases 3 bei von der Temperatur in der Behandlungskammer 1.1 entkoppelten Temperaturen bis zu ca. 1250°C, in diesem Beispiel gemäss einer Reaktionsbeziehung

$$2CH_4 + O_2 \Rightarrow 2CO + 4H_2$$

$$CH_4 + CO_2 \Rightarrow 2CO + 2H_2$$

$$CH_4 + H_2O \Rightarrow CO + 3H_2$$

in einem Aufbereitungsschritt angereichert und erzeugt und das nach einem Prozessschritt einer Aufkohlung (siehe Fig. 1 und Fig. 2), in diesem Beispiel gemäss einer Reaktionsbeziehung

$$2CO \rightarrow \mathrm{C+CO_2}$$

$$\mathrm{CO+H_2 \rightarrow C+H_2O}$$

$$\mathrm{CO \rightarrow C+ 0{,}5O_2}$$

verbrauchte Prozessgas 3 der Behandlungskammer 1.1 wieder zugeführt.

In diesem Zusammenhang ist wiederholt darauf hinzuweisen, dass in Abhängigkeit entsprechender Wärmebehandlungsverfahren für die Aufbereitung des Prozessgases 3 und seinem behandlungsbedingten Verbrauch im Sinne des Kerngedankens der Erfindung auch andere Reaktionen je nach Zusammensetzung der Gaskomponenten ablaufen können.

Dabei erfolgt der Ablauf des Aufbereitungsschritts und des Prozessschritts - wie hier der Aufkohlung - in einem rezirkulierenden Kreislauf. Der Aufbereitungsschritt wird in der vom Industrieofen 1 separierten, über die Leitungen 1.5, 1.6 mit der Behandlungskammer 1.1 verbundenen Aufbereitungskammer 2.2 mit Katalysator 2.2.1 und Temperaturregeleinrichtung 2.2.2 durchgeführt.

Das verbrauchte Prozessgas 3 wird aus der Behandlungskammer 1.1 über die Ableitung 1.6 aus der Behandlungskammer 1.1 durch den beschleunigenden Prozessgasverdichter 2.3 zu der Aufbereitungskammer 2.2 und nach der Aufbereitung als aufbereitetes Prozessgas 3 wieder aus der Aufbereitungskammer 2.2 über die Zuleitung 1.5 zu der Behandlungskammer 1.1 beschleunigt und hochverdichtet geführt. Den Ablauf unterstützt der Prozessgas-Verdichter 2.3 wesentlich hinsichtlich den erfindungsgemäss verbesserten Wirkungen der

- Gasreaktionen zur Erzeugung der aufkohlenden Gaskomponenten in der Atmosphäre,
- konvektiven Gasphasenhomogenisierung für den Transport der kohlenstoffhaltigen Moleküle innerhalb der Gasphase und zum Bauteil,
- Diffusionstransporte der kohlenstoffhaltigen Moleküle durch die Strömungsgrenzschicht an die Bauteiloberfläche,
- Dissoziation und Adsorption betreffend die Spaltung der Moleküle an der Bauteiloberfläche,
- Absorption des Kohlenstoffs durch die Bauteiloberfläche und
- Diffusion des Kohlenstoffs in das Bauteil.

Für die erfindungsgemässe Aufbereitung der Prozessgase 3 umfasst diese mindestens

o das erste Behandlungsmedium 3.1 wie Schutzgas, welches neben den Mindestkomponenten Kohlenstoffmonoxid, Wasserstoff und Stickstoff auch die Komponenten Kohlenstoffdioxid, Sauerstoff und Wasserdampf aufweist, und

o das zweite Behandlungsmedium 3.2 wie Reaktionsgas, welches zu dem aufkohlenden Prozess führt.

Zusammengefasst ablaufend

- wird demnach das Prozessgas 3 im Aufbereitungsschritt hinsichtlich mindestens einer seiner für die Wärmebehandlung erforderlichen Eigenschaften, wie chemischen Eigenschaften, Temperaturen, Drücken oder Strömungsgeschwindigkeiten ausserhalb der Behandlungskammer 1.1 und des Industrieofens 1 in der externen Baueinheit 2 separiert aufbereitet,
- werden dabei die Komponenten, wie Kohlenstoffdioxid, Sauerstoff und Wasserdampf mit Kohlenwasserstoff als Reaktionsgas zu Kohlenstoffmonoxid und Wasserstoff katalytisch reagieren, und es wird nach dieser Reaktion das Schutzgas ein geregeltes C-Potential aufweisen,
- wird das C-Potential nach mindestens einem der Parameter, wie Temperatur, Druck und Strömungsgeschwindigkeit in Abhängigkeit von den Bedingungen in der Behandlungskammer 1.1 geregelt und unter Verwendung des Prozessgas-Verdichters 2.3 das aufbereitete Prozessgas 3 der Behandlungskammer 1.1 verdichtet, vergleichmäßigt und beschleunigt sowie auf die Werkstoffe/Werkstücke mittels in diesem Fall Mehrpunkt-Einspeisung 1.2 gerichtet und gesteuert zugeführt und
- wird in der Behandlungskammer 1.1 mindestens ein Behandlungsmedium 3.1, 3.2 des Prozessgases 3 rezirkulierend geführt und für die Aufbereitung in der externen Baueinheit 2 zurückgewonnen.

Erforderlichenfalls kann den Behandlungsmedien 3.1, 3.2 des aufzubereitenden Prozessgases 3 aus einem Kaltbereich Luft 3.3 zugeführt werden.

Das verbrauchte Prozessgas 3 oder mindestens eines seiner Behandlungsmedien 3.1, 3.2 wird aus der Behandlungskammer 1.1 angesaugt und aufbereitet wieder in die Behandlungskammer 1.1 zurückgeführt.

Für die strömungsbeschleunigende und verdichtende Umwälzung mindestens eines Behandlungsmediums 3.1, 3.2 des aufzubereitenden Prozessgases 3 können bei Bedarf mehrere Prozessgasverdichter 2.3 verwendet werden, denen die Luft 3.3 ebenfalls aus dem Kaltbereich zur Kühlung zugeführt wird.

Nicht dargestellt ist, dass der Prozessgasverdichter 2.3 durch ein Gebläse angetrieben werden kann.

Vorteilhaft ist es generell, wenn die verdichtende, vermischende/vergleichmäßigende und/oder beschleunigende Führung des Prozessgases 3 gerichtet zu den zu behandelnden Werkstoffen/Werkstücken der Charge über die Multipointeinspeisung/Mehrpunkteinspeisung 1.2 erfolgt, welche der Behandlungskammer 1.1 des jeweiligen Ofentyps angepasst werden kann.

Das aufbereitete Prozessgas 3 kann günstig mittels strömungsoptimierender Leiteinrichtungen zu den Werkstücken/Werkstoffen geführt werden, was hier nicht dargestellt ist.

Das Verfahren wird vorteilhaft z.B. in nicht dargestellten Ofenlinien angewendet, wenn das Prozessgas 3 oder mindestens eines der Behandlungsmedien 3.1, 3.2 aus mindestens einem zweiten Industrieofen 1 abgezweigt wird.

Zur Steuerung und Regelung einschliesslich der Überwachung der Prozessatmosphäre in der Behandlungskammer 1.1 des Industrieofens 1 oder der Temperatur des Prozessgases 3 wird ein Equipment 2.4 mit mindestens einem der Elemente, wie Sonden, Analysatoren und Sensoren verwendet, die die Temperatur und den CO - Gehalt sowie den Druck in der Behandlungskammer 1.1 und mindestens einen weiteren der Parameter, wie Sauerstoffpartialdruck, $CO_2$ - Gehalt und Taupunkt der Atmosphäre in der Behandlungskammer 1.1 messen sowie danach die Aufbereitung des Prozessgases 3 in der Aufbereitungskammer 2.2 regeln und die Zuführung in die Behandlungskammer 1.1 oder Abführung von mindestens einem Behandlungsmedium 3.1, 3.2 aus der Behandlungskammer 1.1 steuern.

Zweckmässig wird ein Programm für die Steuerung und Regelung von mindestens einem Behandlungsmedium 3.1, 3.2 des aufzubereitenden Prozessgases 3 für die Atmosphäre in der Behandlungskammer 1.1 verwendet, welches segmentweise mindestens eine getaktete, impulsförmige oder konstante Zugabe von mindestens einem der Behandlungsmedien 3.1, 3.2 wie Reaktionsgase steuert oder regelt.

Das Verfahren ist z.B. in Ofenlinien dahingehend ausbaufähig, dass mindestens ein Behandlungsmedium 3.1, 3.2 des Prozessgases 3 für mehrere Industrieöfen 1 oder Behandlungskammern 1.1 verwendet wird.

Besonders vorteilhaft ist es, wenn der Ablauf zur Steuerung und Regelung einschliesslich der Überwachung der Prozessatmosphäre in der Behandlungskammer 1.1 des Industrieofens 1 oder der Temperatur des Prozessgases 3 mittels eines Equipments 2.4 mit mindestens einem der Elemente, wie Sonden, Analysatoren und Sensoren erfolgt, die die Temperatur und den CO - Gehalt sowie den Druck in der Behandlungskammer 1.1 und mindestens einen weiteren der Parameter, wie Sauerstoffpartialdruck, $CO_2$ - Gehalt und Taupunkt der Atmosphäre in der Behandlungskammer 1.1 misst sowie danach die Aufbereitung des Prozessgases 3 in der Aufbereitungskammer 2.2 regelt und dann die Zuführung oder Abführung in Abhängigkeit von der Rekonditionierungszeit von mindestens einem Behandlungsmedium 3.1, 3.2 aus der Behandlungskammer 1.1 steuert.

Die Rekonditionierungszeit wird dabei in Abhängigkeit von mindestens einem der Parameter, wie

a) Drehzahl des Verdichters und

b) Anzahl der Zyklen, die das Prozess-Gas 3 direkt aufeinanderfolgend die Aufbereitungskammer 2.1 mit Katalysator 2.2 durchläuft,

gesteuert.

Die oben bereits vorgestellte Vorrichtung zur Durchführung des Verfahrens mit einer externen Baueinheit 2 umfasst demnach

a) die schliessbare Aufbereitungskammer 2.2 mit Katalysator 2.2.1 und Temperaturregeleinrichtung 2.2.2 für die Aufbereitung der Prozessgase 3, die mittels je lösbarer und verschliessbarer Zuleitung 1.5 für das in die Behandlungskammer 1.1 des Industrieofens 1 einzuführende aufbereitete Prozessgas 3 oder deren Komponenten wie Behandlungsmedien 3.1, 3.2 und die Ableitung 1.6 für mindestens ein Behandlungsmedium 3.1, 3.2 aus einem Bereich oder der Behandlungskammer 1.1 des Industrieofens 1,

b) den der Aufbereitungskammer 2.2 zugeordneten und funktional eingebundenen gebläseartigen Prozessgas-Verdichter 2.3 mit Antrieb und

c) das funktional mit der Behandlungskammer 1.1 des Industrieofens, der Aufbereitungskammer 2.2 und dem Prozessgas-Verdichter 2.3 verbundene Equipment 2.4 für die Messung der Zufuhr der Behandlungsmedien 3.1, 3.2 des Prozessgases 3, des Druckes in der Behandlungskammer 1.1, der Drehzahl des Prozessgas-Verdichters 2.3 und der der Temperatur des Katalysators 2.2.1,

d) die Schalteinheit 2.5 für die Steuerung und Regelung der Parameter, wie Druck, Temperatur, Volumenstrom des in der Aufbereitungskammer 2.2 aufzubereitenden Prozessgases hinsichtlich der Zuführung von Behandlungsmedien 3.1, 3.2, Zuführung des aufbereiteten Prozessgases 3 in die Behandlungskammer 1.1 des Industrieofens 1 und des C-Pegels sowie Abführung mindestens eines der Behandlungsmedien 3.1, 3.2.

In diesem Beispiel ist die externe Baueinheit 2 als ein Gehäuse mit der schließbaren Aufbereitungskammer 2.2, dem Katalysator 2.2.1 und der Temperaturregeleinrichtung 2.2.2 gebildet. Das Gehäuse 2 besitzt mindestens je eine lösbare und verschließbare Zuleitung 1.5 für das in die Behandlungskammer 1.1 des Industrieofens 1 einzuführende aufbereitete Prozessgas 3 oder deren Komponenten wie Behandlungsmedien 3.1, 3.2 und eine Ableitung 1.6 für mindestens ein Behandlungsmedium 3.1, 3.2 aus einem Bereich oder der Behandlungskammer 1.1 des Industrieofens.

Das Equipment 2.4 ist für die Messung der Zufuhr der Behandlungsmedien 3.1, 3.2 des Prozessgases 3, des Druckes in der Behandlungskammer 1.1, der Drehzahl des Prozessgas-Verdichters 1.4, 2.3 und der Ansteuerung von

hier nicht dargestellten Mitteln wie Klappen zur Erzeugung eines Teilmengenstromes des Prozessgases 3 und der Temperatur des Katalysators 2.2.1 auszubilden.

Die Schalteinheit 2.5 ist für die Steuerung und Regelung der Parameter, wie Druck, Temperatur, Volumenstrom des in der Aufbereitungskammer 2.2 aufzubereitenden Prozessgases 3 vorzusehen.

Für den der Behandlungskammer 1.1 zugeordneten Prozessgas-Verdichter 1.4 kann ein Turbolader eingesetzt werden.

In dem hier vorgestellten erfindungsgemäßen Beispiel ist die separate Baueinheit 2 als eine an den Industrieofen extern anschließbare Baueinheit dargestellt.

Für die Baueinheit 2 kann eine Auskleidung mit einem keramischen Werkstoff verwendet werden, wie es aus dem eingangs geschilderten Stand der Technik bekannt ist.

Die Vorrichtung umfasst schließlich das bereits erwähnte Equipment 2.4 mit mindestens einem der Elemente, wie

a) Sonden, Analysatoren und Sensoren für die Messung einer Temperatur, eines CO - Gehalts sowie eines Druckes in der Behandlungskammer 1.1 und mindestens eines weiteren der Parameter, wie Sauerstoffpartialdruck, $CO_2$ - Gehalt und Taupunkt der Atmosphäre in der Behandlungskammer 1.1,
b) Die Schalteinheit 2.5 als Steuer- und Regeleinrichtung für die Aufbereitung des Prozessgases 3 in der Aufbereitungskammer 2.2 und die Steuerung der Zuführung oder Abführung in Abhängigkeit von der Rekonditionierungszeit und
c) Mittel zur Steuerung einer Verweilzeit, Zyklen oder eines Teilmengenstromes des Prozessgases 3 in der Aufbereitungskammer 2.2 oder der Behandlungskammer 1.1.

**Bezugszeichenliste**

| | |
|---|---|
| 1 | = Industrieofen |
| 1.1 | = Behandlungskammer |
| 1.2 | = Multipointeinspeisung/Mehrpunkteinspeisung |
| 1.3 | = Abschreckbereich |
| 1.4 | = Behandlungskammerumwälzer |
| 1.5 | = Zuleitung |
| 1.6 | = Ableitung |
| 2 | = Baueinheit |
| 2.1 | = Gehäuse |
| 2.2 | = Aufbereitungskammer |
| | 2.2.1 = Katalysator |
| | 2.2.2 = Temperaturregeleinrichtung |
| 2.3 | = Prozessgas-Verdichter |
| 2.4 | = Equipment |
| 2.5 | = Schalteinheit für die Steuerung und Regelung |
| 3 | = Prozessgas |
| 3.1 | = erstes Behandlungsmedium |
| 3.2 | = zweites Behandlungsmedium |
| 3.3 | = Luft |

**Patentansprüche**

1. Verfahren zur Aufbereitung von Prozessgasen (3) für Aufkohlung von metallischen Werkstoffen/Werkstücken in Behandlungskammern (1.1) wie Heizkammern von Industrieöfen (1), bei dem ein jeweiliges Prozessgas (3) bei von der Temperatur in der Behandlungskammer (1.1) entkoppelten Temperaturen in einem vom Wärmebehandlungsprozess in der Behandlungskammer (1.1) separierten Prozess in einem Temperaturbereich bis zu ca. 1250°C katalytisch aufbereitet wird, **gekennzeichnet durch** die Verwendung, einer externen Baueinheit (2), aufweisend die Aufbereitungskammer (2.2) mit Katalysator (2.2.1) und Temperaturregeleinrichtung (2.2.2) und die **durch** Leitungen (1.5, 1.6) mit der Behandlungskammer (1.1) verbunden ist.

2. Verfahren nach Anspruch 1, **dadurch gekennzeichnet, dass** das Prozessgas (3) ein nach dem Wärmebehandlungsprozess oder thermochemischen Behandlung verbrauchtes Prozessgas (3) ist und in dem separierten Prozess aufbereitet wird.

3. Verfahren nach Anspruch 1 oder 2, **dadurch gekennzeichnet, dass** zur Aufbereitung von Prozessgasen (3) für Wärmebehandlungen von metallischen Werkstoffen/Werkstücken in Behandlungskammern (1.1) von Industrieöfen (1) ein jeweiliges Prozessgas (3) bei von der Temperatur in der Behandlungskammer (1.1) entkoppelten Temperaturen bis zu ca. 1250°C gemäss mindestens einer Reaktionsbeziehung

$$2CH_4 + O_2 \Rightarrow 2CO + 4H_2$$

$$CH_4 + CO_2 \Rightarrow 2CO + 2H_2$$

$$CH_4 + H_2O \Rightarrow CO + 3H_2$$

separat in einem Aufbereitungsschritt angereichert und erzeugt wird.

4. Verfahren nach einem der Ansprüche 1 bis 3, **dadurch gekennzeichnet, dass** das nach einem Prozessschritt einer Aufkohlung gemäss mindestens einer Reaktionsbeziehung

$$2CO \rightarrow C+CO_2$$

$$CO+H_2 \rightarrow C+H_2O$$

$$CO \rightarrow C+ 0{,}5O_2$$

verbrauchte Prozessgas der Behandlungskammer (1.1) wieder zugeführt wird.

5. Verfahren nach einem der Ansprüche 1 bis 4, **gekennzeichnet durch** den Ablauf des Aufbereitungsschritts und der Prozessschritte der Wärmebehandlung, thermochemischen Behandlung oder Aufkohlung in einem rezirkulierenden Kreislauf.

6. Verfahren nach einem der Ansprüche 1 bis 5, **gekennzeichnet durch** den Aufbereitungsschritt in einer von der Behandlungskammer (1.1) des Industrieofens (1) separierten Aufbereitungskammer (2.2) mit Katalysator (2.2.1) und Temperaturregeleinrichtung (2.2.2).

7. Verfahren nach einem der Ansprüche 1 bis 6, **dadurch gekennzeichnet, dass** das verbrauchte Prozessgas (3) aus der Behandlungskammer (1.1) über die Ableitung (1.6) aus der Behandlungskammer (1.1) zu der Aufbereitungskammer (2.2) abgesaugt wird.

8. Verfahren nach einem der Ansprüche 1 bis 7, **dadurch gekennzeichnet, dass** das aufbereitete Prozessgas (3) aus der Aufbereitungskammer (2.2) über eine Zuleitung (1.5) zu der Behandlungskammer (1.1) verdichtet zugeführt wird.

9. Verfahren nach einem der Ansprüche 1 bis 8, **gekennzeichnet durch** die Verwendung mindestens eines Prozessgas-Verdichters (1.4, 2.3), welcher den rezirkulierenden Kreislauf des Absaugens des verbrauchten Prozessgases (3) und die Zuführung des aufbereiteten Prozessgases (3) beschleunigt und mindestens letzteres homogenisiert, verdichtet und mit erhöhtem Aktivierungsgrad befördert.

10. Verfahren nach einem der Ansprüche 1 bis 9, **gekennzeichnet durch** die Verwendung eines mindestens in den Aufbereitungsschritt funktional eingebundenen Prozessgas-Verdichters (2.3).

11. Verfahren nach einem der Ansprüche 1 bis 10, **gekennzeichnet durch** die Verwendung eines Turboladers als Prozessgas-Verdichter (2.3).

12. Verfahren nach einem der Ansprüche 1 bis 11, **gekennzeichnet durch** die Verwendung eines Kolbenverdichters als Prozessgas-Verdichter (2.3).

13. Verfahren nach einem der Ansprüche 1 bis 12, wobei zur Aufbereitung von Prozessgasen (3) für Wärmebehandlungen von metallischen Werkstoffen/Werkstücken in Behandlungskammern von Industrieöfen ein jeweiliges Prozessgas mindestens

- ein erstes Behandlungsmedium (3.1) wie Schutzgas, welches neben den Komponenten Kohlenstoffmonoxid, Wasserstoff und Stickstoff auch die Komponenten Kohlenstoffdioxid, Sauerstoff und Wasserdampf aufweisen kann, und
- ein zweites Behandlungsmedium (3.2) wie Reaktionsgas, welches zu einem thermochemischen Prozess führt,

umfasst,
**dadurch gekennzeichnet, dass** das Prozessgas (3)

a) im Aufbereitungsschritt hinsichtlich mindestens einer seiner für die Wärmebehandlung erforderlichen Eigenschaften, wie chemischen Eigenschaften, Temperaturen, Drücken oder Strömungsgeschwindigkeiten ausserhalb der Behandlungskammer (1.1) und des Industrieofens (1) in der separaten Baueinheit (2) aufbereitet wird, dabei
b) die Komponenten, wie Kohlenstoffdioxid, Sauerstoff und Wasserdampf mit Kohlenwasserstoff als Reaktionsgas zu Kohlenstoffmonoxid und Wasserstoff katalytisch reagieren und nach dieser Reaktion das Schutzgas ein geregeltes C-Potential aufweist, wobei
c) das C-Potential nach mindestens einem der Parameter, wie Temperatur, Druck und Strömungsgeschwindigkeit in Abhängigkeit von den Bedingungen in der Behandlungskammer (1.1) geregelt und unter Verwendung des Heissgas-Verdichters (2.3) das aufbereitete Prozessgas (3) der Behandlungskammer (1.1) verdichtet, vergleichmäßigt und beschleunigt sowie auf die Werkstoffe/Werkstücke mittels Ein- oder Mehrpunkt-Einspeisung (1.2) gerichtet und gesteuert zugeführt wird und
d) in der Behandlungskammer (1.1) mindestens ein Behandlungsmedium (3.1, 3.2) des Prozessgases (3) rezirkulierend geführt und für die Aufbereitung in der separaten Baueinheit (2) zurückgewonnen wird.

**14.** Verfahren nach einem der Ansprüche 1 bis 13, **dadurch gekennzeichnet, dass** den Behandlungsmedien (3.1, 3.2) des aufzubereitenden Prozessgases (3) aus einem Kaltbereich Luft (3.3) zugeführt wird.

**15.** Verfahren nach einem der Ansprüche 1 bis 14, **dadurch gekennzeichnet, dass** das verbrauchte Prozessgas (3) oder mindestens eines seiner Behandlungsmedien (3.1, 3.2) aus der Behandlungskammer (1.1) angesaugt und aufbereitet wieder in die Behandlungskammer (1.1) zurückgeführt wird.

**16.** Verfahren nach einem der Ansprüche 1 bis 15, **dadurch gekennzeichnet, dass** für die strömungsbeschleunigende und verdichtende Umwälzung mindestens eines Behandlungsmediums (3.1, 3.2) des aufzubereitenden Prozessgases (3) mindestens ein Prozessgas-Verdichter (1.4, 2.3) verwendet wird, dem Luft (3.3) aus einem Kaltbereich zur Kühlung zugeführt wird.

**17.** Verfahren nach einem der Ansprüche 1 bis 16, **dadurch gekennzeichnet, dass** der Prozessgas-Verdichter (1.4, 2.3) durch ein Gebläse angetrieben wird.

**18.** Verfahren nach einem der Ansprüche 1 bis 17, **dadurch gekennzeichnet, dass** die verdichtende, vermischende/vergleichmäßigende und/oder beschleunigende Führung des Prozeßgases (3) gerichtet zu den zu behandelnden Werkstoffen/Werkstücken einer Charge über die Multipointeinspeisung/Mehrpunkteinspeisung (1.2) erfolgt, welche der Behandlungskammer (1.1) des jeweiligen Ofentyps angepasst wird.

**19.** Verfahren nach einem der Ansprüche 1 bis 18, **dadurch gekennzeichnet, dass** das aufzubereitende Prozessgas (3) mittels strömungsoptimierender Leiteinrichtungen zu den Werkstücken/Werkstoffen geführt wird.

**20.** Verfahren nach einem der Ansprüche 1 bis 6, **dadurch gekennzeichnet, dass** das Prozessgas (3) oder mindestens eines der Behandlungsmedien (3.1, 3.2) aus mindestens einem weiteren Industrieofen (1) oder einer weiteren Behandlungskammer (1.1) abgezweigt wird.

**21.** Verfahren nach einem der Ansprüche 1 bis 20, **dadurch gekennzeichnet, dass** zur Steuerung und Regelung einschliesslich der Überwachung der Prozessatmosphäre in der Behandlungskammer (1.1) des Industrieofens (1) oder der Temperatur des Prozessgases (3) ein Equipment (2.4) mit mindestens einem der Elemente, wie Sonden, Analysatoren und Sensoren verwendet wird, welche Elemente die Temperatur und den CO - Gehalt sowie den Druck in der Behandlungskammer (1.1) und mindestens einen weiteren der Parameter, wie Sauerstoffpartialdruck,

$CO_2$ - Gehalt und Taupunkt der Atmosphäre in der Behandlungskammer (1.1) messen sowie danach die Aufbereitung des Prozessgases (3) in der Aufbereitungskammer (2.2) regeln und die Zuführung oder Abführung in Abhängigkeit von einer Rekonditionierungszeit von mindestens einem Behandlungsmedium (3.1, 3.2) aus der Behandlungskammer (1.1) steuern.

**22.** Verfahren nach einem der Ansprüche 1 bis 21, **dadurch gekennzeichnet, dass** die Rekonditionierungszeit in Abhängigkeit von mindestens einem der Parameter, wie

a) Drehzahl des Verdichters und
b) Anzahl der Zyklen, die das Prozess-Gas (3) direkt aufeinanderfolgend die Aufbereitungskammer (2.1) mit Katalysator (2.2) durchläuft,

gesteuert wird.

**23.** Verfahren nach einem der Ansprüche 1 bis 22, **dadurch gekennzeichnet, dass** ein Programm für die Steuerung und Regelung von mindestens einem Behandlungsmedium (3.1, 3.2) des aufzubereitenden Prozessgases (3) für die Atmosphäre in der Behandlungskammer (1.1) segmentweise durch mindestens eine gepulste, getaktete oder konstante Zugabe von mindestens einem der Behandlungsmedien (3.1, 3.2) wie Reaktionsgase verwendet wird.

**24.** Verfahren nach einem der Ansprüche 1 bis 23, **dadurch gekennzeichnet, dass** mindestens ein Behandlungsmedium (3.1, 3.2) des Prozeßgases (3) für mehrere Industrieöfen (1) oder Behandlungskammern (1.1) verwendet wird.

**25.** Verfahren nach einem der Ansprüche 1 bis 24, **dadurch gekennzeichnet, dass** mindestens in einem Prozessschritt Teilmengenströme des Prozessgases (3) erzeugt und gesteuert werden.

**26.** Vorrichtung zur Durchführung des Verfahrens nach Anspruch 1, **umfassend**

a) eine schliessbare Aufbereitungskammer (2.2) mit Katalysator (2.2.1) und Temperaturregeleinrichtung (2.2.2) für die Aufbereitung der Prozessgase (3),
b) einen funktional eingebundenen Prozessgas-Verdichter (1.4, 2.3),
c) ein funktional mit der Behandlungskammer (1.1) des Industrieofens, der Aufbereitungskammer (2.2) und dem Prozessgas-Verdichter (1.4, 2.3) verbundenes Equipment (2.4) für die Messung der Zufuhr der Behandlungsmedien (3.1, 3.2) des Prozessgases (3) und eine Schalteinheit (2.5) für die Steuerung und Regelung mindestens eines der Parameter des in der Aufbereitungskammer (2.2) aufzubereitenden Prozessgases hinsichtlich der Zuführung von Behandlungsmedien (3.1, 3.2), Zuführung des aufbereiteten Prozessgases (3) in die Behandlungskammer (1.1) des Industrieofens (1) und des C-Pegels sowie Abführung mindestens eines der Behandlungsmedien (3.1, 3.2)

**gekennzeichnet durch**

a) ein Gehäuse (2) mit der schliessbaren Aufbereitungskammer (2.2), dem Katalysator (2.2.1) und der Temperaturregeleinrichtung (2.2.2), welches Gehäuse (2) mindestens je eine lösbare und verschliessbare Zuleitung (1.5) für das in die Behandlungskammer (1.1) des Industrieofens (1) einzuführende aufbereitete Prozessgas (3) oder dessen Komponenten wie Behandlungsmedien (3.1, 3.2) und eine Ableitung (1.6) für mindestens ein Behandlungsmedium (3.1, 3.2) aus einem Bereich oder der Behandlungskammer (1.1) des Industrieofens (1) aufweist,
b) das Equipment (2.4) für die Messung der Zufuhr der Behandlungsmedien (3.1, 3.2) des Prozessgases (3), des Druckes in der Behandlungskammer (1.1), Drehzahl des Prozessgas-Verdichters (1.4, 2.3), Ansteuerung von Mitteln wie Klappen zur Erzeugung eines Teilmengenstromes des Prozessgases (3) und der Temperatur des Katalysators (2.2.1) und
c) die Schalteinheit (2.5) für die Steuerung und Regelung der Parameter, wie Druck, Temperatur, Volumenstrom des in der Aufbereitungskammer (2.2) aufzubereitenden Prozessgases, ferner **gekennzeichnet durch** die Ausbildung als eine an den Industrieofen (1) extern anschliessbare separate Baueinheit (2).

**27.** Vorrichtung nach Anspruch 26, **gekennzeichnet durch** den der Behandlungskammer (1.1) an Stelle eines Behandlungskammerumwälzers (1.4) zugeordneten Prozessgas-Verdichter (2.3).

**28.** Vorrichtung nach Anspruch 26, **gekennzeichnet durch** den der Aufbereitungskammer (2.2) zugeordneten Prozessgas-Verdichter (2.3)

**29.** Vorrichtung nach einem der Ansprüche 26 bis 28, **dadurch gekennzeichnet, dass** die Baueinheit (2) eine Auskleidung mit einem keramischen Werkstoff aufweist.

**30.** Vorrichtung nach einem der Ansprüche 26 bis 29, **gekennzeichnet durch** ein Equipment (2.4) mit mindestens einem der Elemente, wie

a) Sonden, Analysatoren und Sensoren für die Messung einer Temperatur, eines CO - Gehalts sowie eines Druckes in der Behandlungskammer (1.1) und mindestens eines weiteren der Parameter, wie Sauerstoffpartialdruck, $CO_2$ - Gehalt und Taupunkt der Atmosphäre in der Behandlungskammer (1.1),
b) Schalteinheit (2.5) als Steuer- und Regeleinrichtung für die Aufbereitung des Prozessgases (3) in der Aufbereitungskammer (2.2) und die Steuerung der Zuführung oder Abführung in Abhängigkeit von der Rekonditionierungszeit und
c) Mittel zur Steuerung einer Verweilzeit, Zyklen oder eines Teilmengenstromes des Prozessgases (3) in der Aufbereitungskammer (2.2) oder der Behandlungskammer (1.1).

## Claims

**1.** A method for preparing process gases (3) for carburising metallic materials/workpieces in treatment chambers (1.1) such as heating chambers of industrial ovens (1), in which a respective process gas (3) is catalytically prepared at temperatures decoupled from the temperature in the treatment chamber (1.1) in a process that is separated from the heat treatment process in the treatment chamber (1.1) in a temperature range up to approx. 1250 °C, **characterised by** the use of an external unit (2), comprising the preparation chamber (2.2) with catalyst (2.2.1) and temperature control device (2.2.2) and which is connected to the treatment chamber (1.1) by lines (1.5, 1.6).

**2.** The method according to claim 1, **characterised in that** the process gas (3) is a process gas (3) consumed after the heat treatment process or thermochemical treatment and is prepared in the separated process.

**3.** The method according to claim 1 or 2, **characterised in that** for preparing process gases (3) for heat treatments of metallic materials/workpieces in preparation chambers (1.1) of industrial ovens (1) a respective process gas (3) is enriched and generated in a separate preparation step at temperatures decoupled from the temperature in the treatment chamber (1.1) up to approx. 1250 °C according to at least one reaction relation

$$2CH_4 + O_2 \rightarrow 2CO + 4H_2$$

$$CH_4 + CO_2 \rightarrow 2CO + 2H_2$$

**4.** $CH_4 + H_2O \rightarrow CO + 3H_2$ The method according to any one of claims 1 to 3, **characterised in that** the process gas used after a process step of carburisation according to at least one reaction relation

$$2CO \rightarrow C + CO_2$$

$$CO + H_2 \rightarrow C + H_2O$$

$$CO \rightarrow C + 0{,}5O_2$$

is returned to the treatment chamber (1.1).

**5.** The method according to any one of claims 1 to 4, **characterised by** the course of the preparation step and the process steps of the heat treatment, thermochemical treatment or carburisation in a recirculating circuit.

**6.** The method according to any one of claims 1 to 5, **characterised by** the preparation step in a preparation chamber (2.2) with a catalyst (2.2.1) and temperature control device (2.2.2) separated from the treatment chamber (1.1) of the industrial oven (1).

**7.** The method according to any one of claims 1 to 6, **characterised in that** the used process gas (3) is extracted from

the treatment chamber (1.1) via the discharge line (1.6) from the treatment chamber (1.1) to the preparation chamber (2.2).

8. The method according to any one of claims 1 to 7, **characterised in that** the prepared process gas (3) is supplied in a compressed manner from the preparation chamber (2.2) via a feed line (1.5) to the treatment chamber (1.1).

9. The method according to any one of claims 1 to 8, **characterised by** the use of at least one process gas compressor (1.4, 2.3), which accelerates the recirculating circuit of the extraction of the used process gas (3) and the supply of the prepared process gas (3) and homogenises, compresses and transports with an increased level of activation at least the latter.

10. The method according to any one of claims 1 to 9, **characterised by** the use of a process gas compressor (2.3) which is functionally integrated at least in the preparation step.

11. The method according to any one of claims 1 to 10, **characterised by** the use of a turbocharger as a process gas compressor (2.3).

12. The method according to any one of claims 1 to 11, **characterised by** the use of a piston compressor as a process gas compressor (2.3).

13. The method according to any one of claims 1 to 12, wherein for preparing process gases (3) for heat treatments of metallic materials/workpieces in treatment chambers of industrial ovens a respective process gas comprises at least

◦ a first treatment medium (3.1) such as protective gas, which in addition to the components carbon monoxide, hydrogen and nitrogen can also have the components carbon dioxide, oxygen and water vapour, and
◦ a second treatment medium (3.2) such as reaction gas, which leads to a thermochemical process,

**characterised in that** the process gas (3)

a) is prepared in the separate unit (2) in the preparation step with respect to at least one of its properties required for the heat treatment, such as chemical properties, temperatures, pressures or flow velocities outside the treatment chamber (1.1) and the industrial oven (1), with
b) the components, such as carbon dioxide, oxygen and water vapour, reacting catalytically with hydrocarbon as the reaction gas to form carbon monoxide and hydrogen and after this reaction the protective gas having a regulated C-potential, wherein
c) the C-potential is regulated according to at least one of the parameters, such as temperature, pressure and flow velocity depending on the conditions in the treatment chamber (1.1) and compresses, equalises and accelerates the prepared process gas (3) of the treatment chamber (1.1) using the hot gas compressor (2.3) and is supplied in a targeted and controlled manner to the materials/workpieces by means of single or multi-point supply (1.2) and
d) in the treatment chamber (1.1), at least one treatment medium (3.1, 3.2) of the process gas (3) is recirculated and recovered for preparation in the separate unit (2).

14. The method according to any one of claims 1 to 13, **characterised in that** the treatment media (3.1, 3.2) of the process gas (3) to be treated are supplied with air (3.3) from a cold region.

15. The method according to any one of claims 1 to 14, **characterised in that** the used process gas (3) or at least one of its treatment media (3.1, 3.2) is extracted from the treatment chamber (1.1) and recycled back into the treatment chamber (1.1) in a prepared manner.

16. The method according to any one of claims 1 to 15, **characterised in that** at least one process gas compressor (1.4, 2.3) is used for the flow-accelerating and compressing circulation of at least one treatment medium (3.1, 3.2) of the process gas (3) to be treated, to which process gas compressor the air (3.3) is fed from a cold area for cooling.

17. The method according to any one of claims 1 to 16, **characterised in that** the process gas compressor (1.4, 2.3) is operated by a blower.

18. The method according to any one of claims 1 to 17, **characterised in that** the compressing, mixing/equalising

and/or accelerating guidance of the process gas (3) is directed towards the materials/workpieces to be treated in a batch via the multipoint supply/multiple point feed (1.2), which is adapted to the treatment chamber (1.1) of the respective oven type.

**19.** The method according to any one of claims 1 to 18, **characterised in that** the process gas (3) to be prepared is guided to the workpieces/materials by means of flow-optimising guide devices.

**20.** The method according to any one of claims 1 to 6, **characterised in that** the process gas (3) or at least one of the treatment media (3.1, 3.2) is branched off from at least one further industrial oven (1) or a further treatment chamber (1.1).

**21.** The method according to any one of claims 1 to 20, **characterised in that** for control and regulation, including monitoring of the process atmosphere in the treatment chamber (1.1) of the industrial oven (1) or the temperature of the process gas (3) equipment (2.4) having at least one of the elements such as probes, analysers and sensors is used, which elements measure the temperature and the CO content and the pressure in the treatment chamber (1.1) and at least one further parameter, such as oxygen partial pressure, $CO_2$ content and dew point of the atmosphere in the treatment chamber (1.1) and then regulate the preparation of the process gas (3) in the preparation chamber (2.2) and control the supply or discharge depending on a reconditioning time of at least one treatment medium (3.1, 3.2) from the treatment chamber (1.1).

**22.** The method according to any one of claims 1 to 21, **characterised in that** the reconditioning time is controlled as a function of at least one of the parameters, such as

a) speed of the compressor and
b) number of cycles through which the process gas (3) passes through the preparation chamber (2.1) with catalyst (2.2) in direct succession.

**23.** The method according to any one of claims 1 to 22, **characterised in that** a program for the control and regulation of at least one treatment medium (3.1, 3.2) of the process gas (3) to be prepared is used for the atmosphere in the treatment chamber (1.1) segmentally by at least one pulsed, clocked or constant addition of at least one of the treatment media (3.1, 3.2), such as reaction gases.

**24.** The method according to any one of claims 1 to 23, **characterised in that** at least one treatment medium (3.1, 3.2) of the process gas (3) is used for several industrial ovens (1) or treatment chambers (1.1).

**25.** The method according to any one of claims 1 to 24, **characterised in that** partial flow rates of the process gas (3) are generated and controlled at least in one process step.

**26.** A device for performing the method according to claim 1, **comprising**

a) a closable preparation chamber (2.2) with catalyst (2.2.1) and temperature control device (2.2.2) for preparation the process gases (3),
b) a functionally integrated process gas compressor (1.4, 2.3),
c) a piece of equipment (2.4) that is functionally connected to the treatment chamber (1.1) of the industrial oven, to the preparation chamber (2.2) and to the process gas compressor (1.4, 2.3) for measuring the supply of the treatment media (3.1, 3.2) of the process gas (3) and a switching unit (2.5) for the control and regulation of at least one of the parameters of the process gas to be prepared in the preparation chamber (2.2) with regard to the supply of treatment media (3.1, 3.2), supply of the prepared process gas (3) into the treatment chamber (1.1) of the industrial oven (1) and the C-level and discharge of at least one of the treatment media (3.1, 3.2),
**characterised by**
a) a housing (2) with the closable preparation chamber (2.2), the catalyst (2.2.1) and the temperature control device (2.2.2), which housing (2) has at least one detachable and lockable supply line (1.5) for the prepared process gas (3) to be introduced into the treatment chamber (1.1) of the industrial oven (1) or its components such as treatment media (3.1, 3.2) and a discharge line (1.6) for at least one treatment medium (3.1, 3.2) from an area or the treatment chamber (1.1) of the industrial oven (1),
b) the piece of equipment (2.4) for measuring the supply of the treatment media (3.1, 3.2) of the process gas (3), the pressure in the treatment chamber (1.1), speed of the process gas compressor (1.4, 2.3), control of means such as flaps for generating a partial flow of the process gas (3) and the temperature of the catalyst

(2.2.1) and

c) the switching unit (2.5) for the control and regulation of parameters, such as pressure, temperature, volume flow of the process gas to be prepared in the preparation chamber (2.2), further **characterised by** the formation as a separate unit (2) which can be connected externally to the industrial oven (1).

**27.** The device according to claim 26, **characterised by** the process gas compressor (2.3) assigned to the treatment chamber (1.1) instead of a preparation chamber circulator (1.4).

**28.** The device according to claim 26, **characterised by** the process gas compressor (2.3) assigned to the preparation chamber (2.2).

**29.** The device according to any one of claims 26 to 28, **characterised in that** the unit (2) has a lining with a ceramic material.

**30.** The device according to any one of claims 26 to 29, **characterised by** a piece of equipment (2.4) having at least one of the elements, such as

a) probes, analysers and sensors for measuring a temperature, a CO content, as well as a pressure in the treatment chamber (1.1), and at least one of the other parameters, such as oxygen partial pressure, $CO_2$ content and dew point of the atmosphere in the treatment chamber (1.1),

b) switching unit (2.5) as a control and regulating device for the preparation of the process gas (3) in the preparation chamber (2.2) and the control of the feed or discharge depending on the reconditioning time, and

c) means for controlling a dwell time, cycles or a partial flow of the process gas (3) in the preparation chamber (2.2) or the treatment chamber (1.1).

## Revendications

**1.** Procédé de préparation des gaz de procédé (3) destiné à la carburation de matériaux/pièces métalliques dans des chambres de traitement (1.1) telles que des chambres de chauffe des fours industriels (1), dans lequel un gaz de procédé (3) respectif est traité de manière catalytique à des températures découplées de la température dans la chambre de traitement (1.1) dans un procédé séparé du procédé de traitement thermique dans la chambre de traitement (1.1) dans une plage de température allant jusqu'à environ 1250 °C, **caractérisé par** l'utilisation d'une unité structurelle (2) externe, comprenant la chambre de préparation (2.2) comportant un catalyseur (2.2.1) et un dispositif de régulation de température (2.2.2) et laquelle est raccordée à la chambre de traitement (1.1) à l'aide des conduites (1.5, 1.6).

**2.** Procédé selon la revendication 1, **caractérisé en ce que** le gaz de procédé (3) est un gaz de procédé (3) consommé après le procédé de traitement thermique ou le traitement thermochimique et est traité dans le procédé séparé.

**3.** Procédé selon la revendication 1 ou 2, **caractérisé en ce que**, pour le traitement des gaz de procédé (3) pour les traitements thermiques de matériaux/pièces métalliques dans les chambres de traitement (1.1) de fours industriels (1), un gaz de procédé (3) respectif est, à des températures découplées de la température dans la chambre de traitement (1.1), jusqu'à environ 1250 °C, selon au moins une séquence de réactions

$$2CH_4 + O_2 \rightarrow 2CO + 4H_2$$

$$CH_4 + CO_2 - 2CO + 2H_2$$

$$CH_4 + H_2O \rightarrow CO + 3H_2$$

enrichi et généré séparément dans une étape de préparation.

**4.** Procédé selon l'une quelconque des revendications 1 à 3, **caractérisé en ce que** le gaz de procédé utilisé après une étape de procédé de carburation selon au moins une séquence de réactions

$$2CO \rightarrow C + CO_2$$

$$CO + H_2 \rightarrow C + H_2O$$

$$CO \rightarrow C + 0,5O_2$$

est réacheminé dans la chambre de traitement (1.1).

**5.** Procédé selon l'une quelconque des revendications 1 à 4, **caractérisé par** le déroulement de l'étape de préparation et des étapes du procédé de traitement thermique, de traitement thermochimique ou de carburation dans un circuit fermé.

**6.** Procédé selon l'une quelconque des revendications 1 à 5, **caractérisé par** l'étape de préparation dans une chambre de préparation (2.2), séparée de la chambre de traitement (1.1) du four industriel (1), comportant un catalyseur (2.2.1) et un dispositif de régulation de température (2.2.2).

**7.** Procédé selon l'une quelconque des revendications 1 à 6, **caractérisé en ce que** le gaz de procédé (3) consommé est aspiré hors de la chambre de traitement (1.1) par l'intermédiaire d'une conduite d'évacuation (1.6) de la chambre de traitement (1.1) vers la chambre de préparation (2.2).

**8.** Procédé selon l'une quelconque des revendications 1 à 7, **caractérisé en ce que** le gaz de procédé (3) préparé est acheminé comprimé de la chambre de préparation (2.2) par l'intermédiaire d'une conduite d'alimentation (1.5) vers la chambre de traitement (1.1).

**9.** Procédé selon l'une quelconque des revendications 1 à 8, **caractérisé par** l'utilisation d'au moins un compresseur de gaz de procédé (1.4, 2.3), lequel accélère le circuit fermé d'aspiration du gaz de procédé (3) utilisé et l'acheminement du gaz de procédé (3) préparé et homogénéise, compresse et transporte au moins ce dernier à un degré d'activation accru.

**10.** Procédé selon l'une quelconque des revendications 1 à 9, **caractérisé par** l'utilisation d'un compresseur de gaz de procédé (2.3), lequel, au moins dans l'étape de préparation, est intégré de manière fonctionnelle.

**11.** Procédé selon l'une quelconque des revendications 1 à 10, **caractérisé par** l'utilisation d'un turbocompresseur en tant que compresseur de gaz de procédé (2.3).

**12.** Procédé selon l'une quelconque des revendications 1 à 11, **caractérisé par** l'utilisation d'un compresseur à piston en tant que compresseur de gaz de procédé (2.3).

**13.** Procédé selon l'une quelconque des revendications 1 à 12, dans lequel pour la préparation des gaz de procédé (3) pour les traitements thermiques de matériaux/pièces métalliques dans les chambres de traitement de fours industriels, un gaz de procédé respectif comporte au moins

- ◦ un premier milieu de traitement (3.1) tel qu'un gaz protecteur, lequel, en plus des composants monoxyde de carbone, hydrogène et azote, peut également contenir les composants dioxyde de carbone, oxygène et vapeur d'eau, et
- ◦ un second milieu de traitement (3.2) tel qu'un gaz de réaction, lequel conduit à un procédé thermochimique,

**caractérisé en ce que** le gaz de procédé (3),

a) dans l'étape de préparation, en ce qui concerne au moins l'une de ses propriétés requises pour le traitement thermique, telles que les propriétés chimiques, les températures, les pressions ou les vitesses d'écoulement à l'extérieur de la chambre de traitement (1.1) et du four industriel (1), est préparé dans l'unité structurelle (2) séparée,
b) les composants, tels que le dioxyde de carbone, l'oxygène et la vapeur d'eau, réagissant ainsi de manière catalytique avec un hydrocarbure en tant que gaz de réaction pour former du monoxyde de carbone et de l'hydrogène et après cette réaction, le gaz protecteur présentant un potentiel C régulé, dans lequel
c) le potentiel C est régulé selon au moins un des paramètres, tels que la température, la pression et la vitesse d'écoulement, en fonction des conditions dans la chambre de traitement (1.1) et, à l'aide du compresseur de gaz chaud (2.3), comprime, égalise et accélère le gaz de procédé (3) préparé de la chambre de traitement (1.1), ainsi qu'achemine de manière dirigée et commandée sur les matériaux/pièces au moyen d'une alimentation

à un ou à plusieurs points (1.2), et

d) dans la chambre de traitement (1.1), au moins un milieu de traitement (3.1, 3.2) du gaz de procédé (3) est acheminé en circuit fermé et récupéré pour la préparation dans l'unité structurelle (2) séparée.

**14.** Procédé selon l'une quelconque des revendications 1 à 13, **caractérisé en ce que** de l'air (3.3) est acheminé vers les milieux de traitement (3.1, 3.2) du gaz de procédé (3) à préparer à partir d'une zone froide.

**15.** Procédé selon l'une quelconque des revendications 1 à 14, **caractérisé en ce que** le gaz de procédé (3) utilisé ou au moins un de ses milieux de traitement (3.1, 3.2) est aspiré hors de la chambre de traitement (1.1) et, préparé, est réacheminé dans la chambre de traitement (1.1).

**16.** Procédé selon l'une quelconque des revendications 1 à 15, **caractérisé en ce que**, pour la circulation d'accélération et de compression de l'écoulement d'au moins un milieu de traitement (3.1, 3.2) du gaz de procédé (3) à traiter, au moins un compresseur de gaz de procédé (1.4, 2.3) est utilisé, vers lequel l'air (3.3) est acheminé à partir d'une zone froide pour le refroidissement.

**17.** Procédé selon l'une quelconque des revendications 1 à 16, **caractérisé en ce que** le compresseur de gaz de procédé (1.4, 2.3) est entraîné par une soufflante.

**18.** Procédé selon l'une quelconque des revendications 1 à 17, **caractérisé en ce que** l'acheminement de compression, mélange/égalisation et/ou d'accélération du gaz de procédé (3) est dirigé vers les matériaux/pièces d'une charge à traiter par l'intermédiaire de l'alimentation multipoint / à points multiples (1.2), laquelle est adaptée à la chambre de traitement (1.1) du type de four respectif.

**19.** Procédé selon l'une quelconque des revendications 1 à 18, **caractérisé en ce que** le gaz de procédé (3) à préparer est acheminé vers les pièces/matériaux au moyen des dispositifs de conduite à optimisation de l'écoulement.

**20.** Procédé selon l'une quelconque des revendications 1 à 6, **caractérisé en ce que** le gaz de procédé (3) ou l'au moins un des milieux de traitement (3.1, 3.2) est soutiré d'au moins un autre four industriel (1) ou d'une autre chambre de traitement (1.1).

**21.** Procédé selon l'une quelconque des revendications 1 à 20, **caractérisé en ce que** pour la commande et la régulation, notamment la surveillance de l'atmosphère de procédé dans la chambre de traitement (1.1) du four industriel (1) ou de la température du gaz de procédé (3), un équipement (2.4) comportant un des éléments tels que des sondes et/ou des analyseurs et/ou des capteurs sont utilisés, lesdits éléments mesurant la température et la teneur en CO ainsi que la pression dans la chambre de traitement (1.1) et au moins un autre des paramètres, tels que la pression partielle d'oxygène, la teneur en $CO_2$ et le point de rosée de l'atmosphère dans la chambre de traitement (1.1), puis régulant la préparation du gaz de procédé (3) dans la chambre de préparation (2.2) et commandant l'acheminement ou l'évacuation en fonction d'un temps de reconditionnement d'au moins un milieu de traitement (3.1, 3.2) de la chambre de traitement (1.1).

**22.** Procédé selon l'une quelconque des revendications 1 à 21, **caractérisé en ce que** le temps de reconditionnement est commandé en fonction des paramètres, tel que

a) la vitesse de rotation du compresseur et/ou

b) le nombre de cycles par lesquels le gaz de procédé (3) passe directement de manière successive à travers la chambre de traitement (2.1) comportant le catalyseur (2.2).

**23.** Procédé selon l'une quelconque des revendications 1 à 22, **caractérisé en ce qu'**un programme de commande et de régulation d'au moins un milieu de traitement (3.1, 3.2) du gaz de procédé (3) à préparer pour l'atmosphère dans la chambre de traitement (1.1) est utilisé par segments à l'aide d'au moins une addition puisée, cadencée ou constante d'au moins un des milieux de traitement (3.1, 3.2) tels que les gaz de réaction.

**24.** Procédé selon l'une quelconque des revendications 1 à 23, **caractérisé en ce qu'**au moins un milieu de traitement (3.1, 3.2) du gaz de procédé (3) est utilisé pour plusieurs fours industriels (1) ou chambres de traitement (1.1).

**25.** Procédé selon l'une quelconque des revendications 1 à 24, **caractérisé en ce que**, au moins dans une étape de procédé, des écoulements partiels du gaz de procédé (3) sont générés et commandés.

**26.** Dispositif de mise en œuvre du procédé selon la revendication 1, comprenant

a) une chambre de préparation (2.2) pouvant être fermée comportant un catalyseur (2.2.1) et un dispositif de régulation de température (2.2.2) pour la préparation des gaz de procédé (3),
b) un compresseur de gaz de procédé (1.4, 2.3) intégré de manière fonctionnelle,
c) un équipement (2.4) raccordé de manière fonctionnelle à la chambre de traitement (1.1) du four industriel, à la chambre de préparation (2.2) et au compresseur de gaz de procédé (1.4, 2.3) pour mesurer l'acheminement des milieux de traitement (3.1, 3.2) du gaz de procédé (3) et une unité de commutation (2.5) pour la commande et la régulation d'au moins un des paramètres du gaz de procédé à préparer dans la chambre de préparation (2.2) en ce qui concerne l'acheminement des milieux de traitement (3.1, 3.2), l'acheminement du gaz de procédé (3) préparé dans la chambre de traitement (1.1) du four industriel (1) et le niveau de C ainsi que l'évacuation d'au moins un des milieux de traitement (3.1, 3.2), **caractérisé par**
a) une enceinte (2) comportant la chambre de préparation (2.2) pouvant être fermée, le catalyseur (2.2.1) et le dispositif de régulation de température (2.2.2), ladite enceinte (2) comportant respectivement au moins une conduite d'alimentation (1.5) amovible et verrouillable pour le gaz de procédé (3) préparé à introduire dans la chambre de traitement (1.1) du four industriel (1) ou ses composants tels que des milieux de traitement (3.1, 3.2) et une conduite d'évacuation (1.6) pour au moins un milieu de traitement (3.1, 3.2) d'une zone ou de la chambre de traitement (1.1) du four industriel (1),
b) l'équipement (2.4) pour la mesure de l'acheminement des milieux de traitement (3.1, 3.2) du gaz de procédé (3), la pression dans la chambre de traitement (1.1), la vitesse de rotation du compresseur de gaz de procédé (1.4, 2.3), la commande de moyens tels que les volets de génération d'un écoulement partiel du gaz de procédé (3) et la température du catalyseur (2.2.1) et
c) l'unité de commutation (2.5) pour la commande et la régulation des paramètres, tels que la pression, la température, le débit volumique du gaz de procédé à préparer dans la chambre de préparation (2.2), **caractérisé en outre par** la conception sous la forme d'une unité structurelle (2) séparée, laquelle peut être raccordée de l'extérieur au four industriel (1).

**27.** Appareil selon la revendication 26, **caractérisé par** le compresseur de gaz de procédé (2.3) affecté à la chambre de traitement (1.1) au lieu d'un circulateur de chambre de traitement (1.4).

**28.** Appareil selon la revendication 26, **caractérisé par** le compresseur de gaz de procédé (2.3) affecté à la chambre de préparation (2.2).

**29.** Dispositif selon l'une quelconque des revendications 26 à 28, **caractérisé en ce que** l'unité structurelle (2) comporte un revêtement en matériau céramique.

**30.** Dispositif selon l'une quelconque des revendications 26 à 29, **caractérisé par** un équipement (2.4) comportant des éléments, tel que

a) les sondes et/ou les analyseurs et/ou capteurs pour la mesure d'une température, d'une teneur en CO et d'une pression dans la chambre de traitement (1.1) et de l'au moins un des autres paramètres, tels que la pression partielle d'oxygène, la teneur en $CO_2$ et le point de rosée de l'atmosphère dans la chambre de traitement (1.1),
b) une unité de commutation (2.5) en tant que dispositif de commande et de régulation pour la préparation du gaz de procédé (3) dans la chambre de préparation (2.2) et la commande de l'acheminement ou de l'évacuation en fonction du temps de reconditionnement, et
c) un moyen de commande d'un temps de séjour, de cycles ou d'un écoulement partiel du gaz de procédé (3) dans la chambre de préparation (2.2) ou dans la chambre de traitement (1.1).

Fig. 1

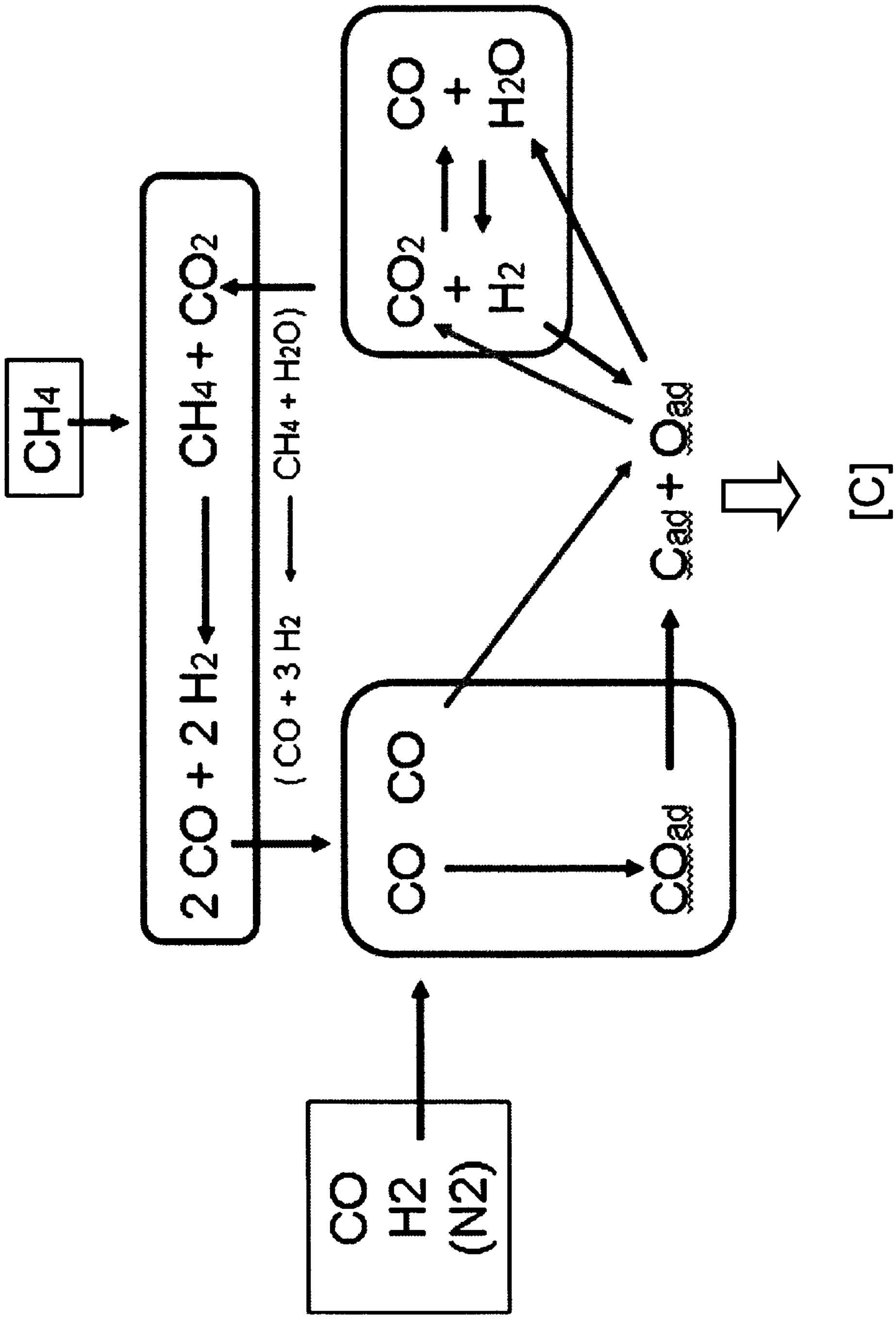
$CH_4$
$2\,CO + 2\,H_2$ — $CH_4 + CO_2$
$(CO + 3\,H_2$ — $CH_4 + H_2O)$
CO
H2
(N2)
CO CO
$CO_{ad}$
$CO_2$ + $H_2$
CO + $H_2O$
$C_{ad} + O_{ad}$
[C]

Fig. 2

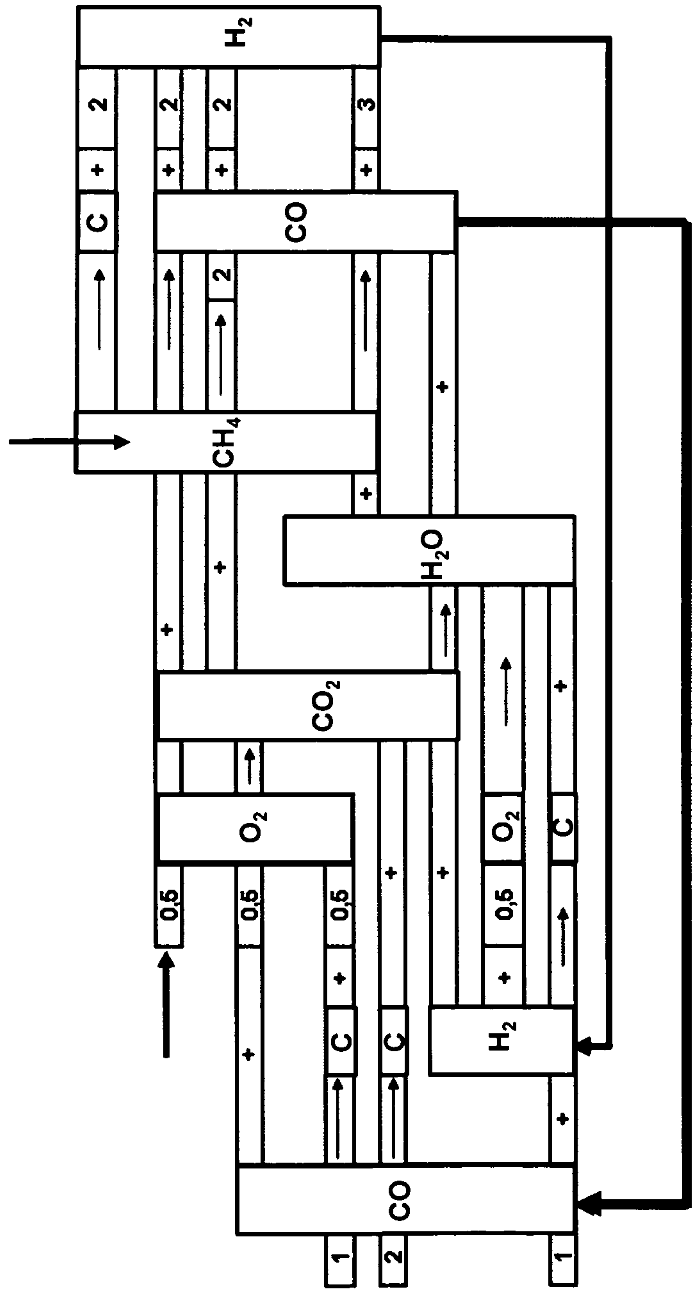

Fig. 3

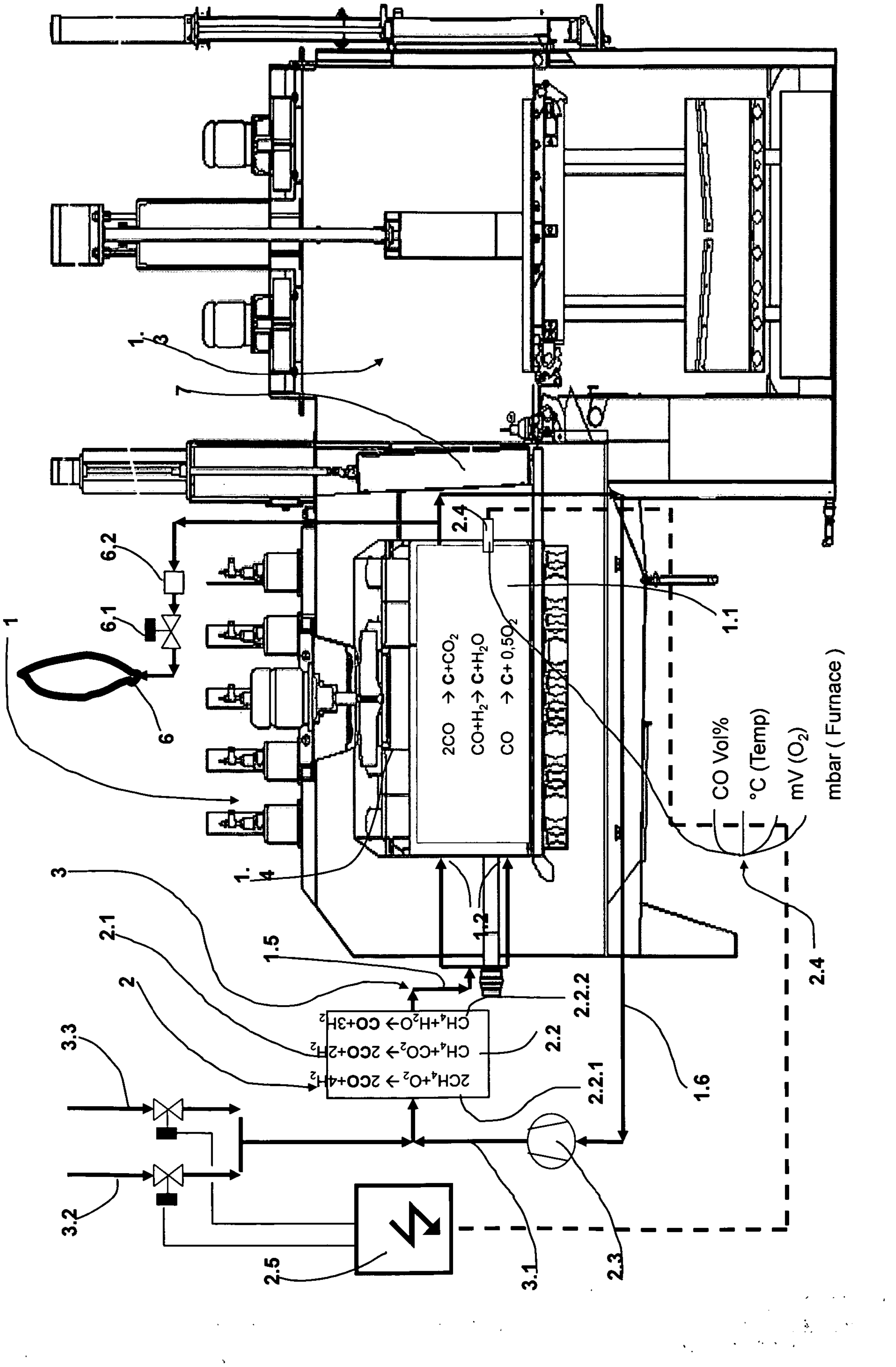
1
1.1
1.2
1.3
1.4
1.5
1.6
2
2.1
2.2
2.2.1
2.2.2
2.3
2.4
2.5
3
3.1
3.2
3.3
6
6.1
6.2
7
$2CO \rightarrow C+CO_2$
$CO+H_2 \rightarrow C+H_2O$
$CO \rightarrow C+0,5O_2$
$2CH_4+O_2 \rightarrow 2CO+4H_2$
$CH_4+CO_2 \rightarrow 2CO+2H_2$
$CH_4+H_2O \rightarrow CO+3H_2$
CO Vol%
°C (Temp)
mV ($O_2$)
mbar ( Furnace )

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2909978
- DE 29908528 U1
- DE 3632577
- DE 3888814
- DE 4005710
- DE 69133356
- DE 4416469
- GB 1069531 A
- US 3620518 A
- US 4294436 A
- US 5645808 F
- US 20060081567 A
- JP 62199761 B
- DE 102008029001745


### In der Beschreibung aufgeführte Nicht-Patentliteratur


- **W. GÖRING.** Heiß in den Ofenraum eingeführte Gasgemische als Atmosphäre bei der Wärmebehandlung von Stahl. *HTM,* 1975, vol. 30 (2), 107